# EUROPEAN PATENT APPLICATION

(11) **EP 4 770 251 A1**
(43) Date of publication of application: **01.07.2026**
(21) Application number: 24867170.3
(22) Date of filing: 13.08.2024
(51) Int. Cl.: H04W 72/542

(54) **COMMUNICATION METHOD AND APPARATUS**

(30) Priority: 19.09.2023 CN 202311215480
(71) Applicant: HUAWEI TECHNOLOGIES CO., LTD., Shenzhen, Guangdong 518129 (CN)
(72) Inventor: Ge, Cuili, Shenzhen, Guangdong 518129 (CN); Ying, Jiangwei, Shenzhen, Guangdong 518129 (CN)
(74) Representative: Gill Jennings & Every LLP
(86) International application number: PCT/CN2024/111834
(87) International publication number: WO 2025/060753

(57) **Abstract**

This application provides a communication method and apparatus, and relates to the mobile communication field. According to the method, a sensing network element may obtain capability information of a device supporting an N3GPP sensing capability, and select a first device in response to the capability information and sensing requirement information that is from a requesting device. The sensing network element may further send a first message to the selected first device, to request N3GPP sensing data. The sensing network element may further receive first sensing data from the first device, where the first sensing data includes the N3GPP sensing data. Sensing performance can be improved based on the N3GPP sensing data.

## Description

### CROSS-REFERENCE TO RELATED APPLICATIONS

This application claims priority to Chinese Patent Application No. 202311215480.9, filed with the China National Intellectual Property Administration on September 19, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With continuous development of mobile communication technologies and continuous enhancement of air interface capabilities, mobile networks have made a qualitative leap from merely providing a simple voice service, SMS message service, and data service to achieving the internet of everything. In addition, continuous innovation of information technologies brings new requirements and new services such as artificial intelligence, immersive experience, and digital twins, and poses higher information exchange requirements for communication networks. In addition to improvement of conventional communication capabilities, capabilities such as computing, sensing, artificial intelligence, and security are further to be provided. The sensing capability is to become an important capability and characteristic of future mobile communication networks.

To support the sensing capability, the 3rd generation partnership project (3rd generation partnership project, 3GPP) describes use cases and potential requirements of sensing services. For example, sensing application scenarios relate to highways, railways, home intrusion scenarios, uncrewed aerial vehicle intrusion scenarios, intelligent parking scenarios, uncrewed aerial vehicle collision sensing, uncrewed aerial vehicle route tracking, and people and vehicle traffic sensing. Currently, the 3GPP supports target object sensing performed by using a 3GPP access technology. Currently, based on 3GPP sensing, a core network in a 5th generation (5th generation, 5G) mobile communication system can obtain sensing data based on sensing of a terminal device and/or an access network device. Limited by coverage of a sensing device, a device capability, and an upper limit of accuracy that can be achieved by a technology, sensing accuracy based on 3GPP sensing that is a monotonous sensing technology may not satisfy requirements of application and the services.

### SUMMARY

This application provides a communication method and apparatus, to enhance sensing performance by using a non-3rd generation partnership project (non-3GPP, N3GPP) sensing technology.

According to a first aspect, a communication method is provided. The method may be implemented by a sensing network element. The sensing network element may be an SF or a component in the SF, for example, an SF-C or an SF-U, or may be a sensing server. The component in this application may include, for example, at least one of a chip, a chip system, a processor, a transceiver, a processing unit, or a transceiver unit. For example, an execution body is the sensing network element. The method may be implemented by using the following steps: The sensing network element obtains capability information of a device supporting an N3GPP sensing capability. The sensing network element receives a sensing request message from a requesting device, where the sensing request message is for requesting sensing data. The sensing network element determines a first device based on the capability information in response to the sensing request message, where the first device is one or more devices supporting an N3GPP sensing capability. The sensing network element sends a first message to the first device, where the first message is for requesting N3GPP sensing data. The sensing network element receives first sensing data from the first device, where the first sensing data includes the N3GPP sensing data.

According to the method shown in the first aspect, the sensing network element may obtain the capability information of the device supporting an N3GPP sensing capability, and select the first device based on the capability information and sensing requirement information that is from the requesting device, to obtain the N3GPP sensing data via the selected first device. Sensing performance can be improved based on the N3GPP sensing data.

In a possible implementation, the sensing network element may select the first device based on first sensing requirement information and the capability information, so that the selected first device satisfies a sensing requirement. In a possible embodiment, the first sensing requirement information may be the same as fourth sensing requirement information carried in the sensing request message, or may be obtained based on the fourth sensing requirement information.

In a possible implementation, the first message includes second sensing requirement information. Therefore, the first device may perform N3GPP sensing based on the second sensing requirement information, to provide the N3GPP sensing data that satisfies a requirement. In a possible embodiment, the second sensing requirement information may be the same as the fourth sensing requirement information carried in the sensing request message, or may be obtained based on the fourth sensing requirement information.

In a possible implementation, the sensing network element may obtain the capability information from the device supporting an N3GPP sensing capability, an application function, a unified data repository network element, a unified data management network element, an N3GPP sensing capability repository function network element, or an access and mobility management network element. The N3GPP sensing capability repository function network element may be a dedicated N3GPP sensing-related storage network element. The access and mobility management network element may be an AMF corresponding to an area of a device supporting a 3GPP sensing capability.

In a possible implementation, the sensing network element sends a device request message and/or a device subscription message to the device supporting an N3GPP sensing capability, the application function, the unified data repository network element, the unified data management network element, the N3GPP sensing capability repository function network element, or the access and mobility management network element, where the device request message and/or the device subscription message include/includes third sensing requirement information, and the third sensing requirement information is for discovering a device supporting an N3GPP sensing capability. Therefore, the sensing network element may request, by using the third sensing requirement information, capability information that is of the device supporting an N3GPP sensing capability and that satisfies the sensing requirement. In a possible embodiment, the third sensing requirement information may be the same as the fourth sensing requirement information carried in the sensing request message, or may be obtained based on the fourth sensing requirement information.

In a possible implementation, the sensing network element may further send second sensing data to the requesting device. The second sensing data may be further sensing data obtained based on the first sensing data. For example, the second sensing data may be for determining a sensing result. In addition, the second sensing data may also include the sensing result.

In a possible implementation, the sensing network element receives 3GPP sensing data from a second device, where the second device is a device supporting a 3GPP sensing capability. The sensing network element generates the second sensing data based on the first sensing data and the 3GPP sensing data. Based on this implementation, when the sensing network element is the SF, the sensing network element may obtain the 3GPP sensing data from the device (namely, the second device) supporting a 3GPP sensing capability, and perform processing such as fusion and/or analysis on the 3GPP sensing data and the first sensing data, to obtain the second sensing data.

In a possible implementation, in the foregoing implementation, the first message is further used by the first device to obtain the 3GPP sensing data. In this case, the second device and the first device are a same device. In other words, the second device may include but is not limited to the first device.

In a possible implementation, the sensing network element may receive 3GPP sensing data from a sensing function network element. The sensing network element generates the second sensing data based on the first sensing data and the 3GPP sensing data. Based on this implementation, when the sensing network element is the sensing server, the sensing network element may obtain the 3GPP sensing data from the SF, and perform processing such as fusion and/or analysis on the 3GPP sensing data and the first sensing data, to obtain the second sensing data. A manner in which the SF obtains the 3GPP sensing data is not specifically required in this application.

In a possible implementation, the sensing network element sends a second message to the sensing function network element, where the second message is for requesting 3GPP sensing data.

In a possible implementation, the first sensing data is generated based on the N3GPP sensing data and the 3GPP sensing data. In other words, the first device may fuse the 3GPP sensing data and the N3GPP sensing data.

In a possible implementation, the sensing request message includes fourth sensing requirement information. The fourth sensing requirement information represents a sensing requirement of the requesting device.

In a possible implementation, the sensing network element may further send, to the first device, an address and/or data label information that are/is for receiving the first sensing data. The sensing network element receives, from the first device, the first sensing data whose destination address is the address; and/or the sensing network element receives, from the first device, the first sensing data that includes the data label information. The address and/or a label may be used by the sensing network element to identify that the received sensing data includes the N3GPP sensing data.

According to a second aspect, a communication method is provided. The method may be implemented by a first device. The first device may include a terminal or a base station, or may be a component in the terminal or the base station. The component in this application may include, for example, at least one of a chip, a chip system, a processor, a transceiver, a processing unit, or a transceiver unit. For example, an execution body is the first device. The method may be implemented by using the following steps: The first device receives a first message from a sensing network element, where the first message is for requesting N3GPP sensing data, and the first device is a device supporting N3GPP sensing. The first device obtains first sensing data in response to the first message, where the first sensing data includes the N3GPP sensing data. The first device sends the first sensing data to the sensing network element.

In a possible implementation, the first device may further send capability information of the first device to the sensing network element, an application function, a unified data repository network element, a unified data management network element, an N3GPP sensing capability repository function network element, or an access and mobility management network element, where the capability information is used by the sensing network element to determine the first device.

In a possible implementation, the first device may further receive a device request message and/or a device subscription message from the sensing network element, where the device request message and/or the device subscription message include/includes third sensing requirement information, and the third sensing requirement information is for discovering a device supporting an N3GPP sensing capability.

In a possible implementation, the first message is further for requesting 3GPP sensing data. The first device may further send the 3GPP sensing data to the sensing network element; or the first device may further generate the first sensing data based on the 3GPP sensing data and the N3GPP sensing data.

In a possible implementation, the first device may further receive, from the sensing network element, an address and/or data label information that are/is for receiving the first sensing data. In addition, the first device may further send, to the sensing network element, the first sensing data whose destination address is the address; and/or the first device may further send, to the sensing network element, the first sensing data that includes the data label information.

In any one of the possible implementations of the first aspect and/or the second aspect, the device supporting an N3GPP sensing capability includes: a device having an N3GPP sensing capability and/or a device connected to the device having an N3GPP sensing capability.

In any one of the possible implementations of the first aspect and/or the second aspect, the capability information of the device supporting an N3GPP sensing capability includes one or more of the following: a supported sensing area; a position; an indication indicating that an N3GPP sensing capability is supported; a supported sensing type; a device identifier; a supported sensing capability indicator; and supported sensing data fusion capability information, indicating that fusion of N3GPP sensing data and 3GPP sensing data is supported, and/or indicating a supported fusion indicator of N3GPP sensing data and 3GPP sensing data.

In any one of the possible implementations of the first aspect and/or the second aspect, one or more of the first sensing requirement information, the second sensing requirement information, the third sensing requirement information, and the fourth sensing requirement information include one or more of the following information: a required sensing area; a required sensing capability indicator; fusion requirement information, indicating to fuse N3GPP sensing data and 3GPP sensing data, and/or indicating a required fusion indicator of N3GPP sensing data and 3GPP sensing data; a required sensing type; and sensing service information, where the sensing service information is for determining one or more of the required sensing area, the required sensing capability indicator, the fusion requirement information, and the required sensing type.

For beneficial effects of the second aspect and the possible implementations of thereof, refer to the descriptions of the beneficial effects of the first aspect and the corresponding implementations thereof. Repeated parts are not described again.

According to a third aspect, a communication method is provided. The method may be implemented by a sensing network element or a component in the sensing network element, and a sensing server or a component in the sensing server, where the sensing network element is an SF. The method may be implemented by using the following steps: obtaining capability information of a device supporting an N3GPP sensing capability; receiving a sensing request message from a requesting device, where the sensing request message is for requesting sensing data; determining a first device based on the capability information in response to the sensing request message, where the first device is one or more devices supporting an N3GPP sensing capability; sending a first message to the first device, where the first message is for requesting N3GPP sensing data; and receiving first sensing data from the first device, where the first sensing data includes the N3GPP sensing data.

A difference from the first aspect lies in that, in the method shown in the third aspect, the sensing network element may receive the sensing request message from the requesting device, and the sensing server sends the first message to the first device, to request the first device to perform N3GPP sensing. Optionally, the sensing network element and/or the sensing server may select the first device. For a manner of selecting the first device, refer to the first aspect.

In a possible implementation, the device supporting an N3GPP sensing capability includes: a device having an N3GPP sensing capability and/or a device connected to the device having an N3GPP sensing capability.

In a possible implementation, the receiving the first sensing data from the first device includes: A sensing server receives the first sensing data from the first device. The sensing server sends the first sensing data to a sensing network element.

In a possible implementation, the obtaining the capability information of the device supporting an N3GPP sensing capability includes: The sensing server obtains the capability information of the device supporting an N3GPP sensing capability. The receiving the sensing request message from the requesting device includes: The sensing network element receives the sensing request message. The determining the first device based on the capability information in response to the sensing request message includes: The sensing network element sends a third message to the sensing server in response to the sensing request message, where the third message is for requesting N3GPP sensing data. The sensing server determines the first device based on the capability information in response to the third message.

In a possible implementation, the determining the first device based on the capability information includes: selecting the first device based on first sensing requirement information and the capability information.

In a possible implementation, the third message includes second sensing requirement information.

In a possible implementation, the obtaining the capability information of the device supporting an N3GPP sensing capability includes: The sensing server obtains the capability information from the device supporting an N3GPP sensing capability, an application function, a unified data repository network element, a unified data management network element, an N3GPP sensing capability repository function network element, or an access and mobility management network element.

In a possible implementation, the sensing server sends a device request message and/or a device subscription message to the device supporting an N3GPP sensing capability, the application function, the unified data repository network element, the unified data management network element, the N3GPP sensing capability repository function network element, or the access and mobility management network element, where the device request message and/or the device subscription message include/includes third sensing requirement information, and the third sensing requirement information is for discovering a device supporting an N3GPP sensing capability.

In a possible implementation, the capability information includes one or more of the following: a supported sensing area; a position; an indication indicating that an N3GPP sensing capability is supported; a device identifier; a supported sensing type; a supported sensing capability indicator; and supported sensing data fusion capability information, indicating that fusion of N3GPP sensing data and 3GPP sensing data is supported, and/or indicating a supported fusion indicator of N3GPP sensing data and 3GPP sensing data.

In a possible implementation, the sensing network element receives the sensing request message from the requesting device, where the sensing request message is for requesting a sensing result, and the sensing request message includes fourth sensing requirement information; and the method further includes: The sensing network element sends second sensing data to the requesting device.

In a possible implementation, the sensing network element may further generate the second sensing data based on the first sensing data and 3GPP sensing data.

In a possible implementation, that the sensing network element generates the second sensing data based on the first sensing data and the 3GPP sensing data includes: The sensing network element receives the 3GPP sensing data from a second device, and receiving the first sensing data from the sensing server. The sensing network element generates the second sensing data based on the first sensing data and the 3GPP sensing data.

In a possible implementation, the first message is further used by the first device to obtain the 3GPP sensing data, and the second device and the first device are a same device.

In a possible implementation, the first sensing data is generated based on the N3GPP sensing data and the 3GPP sensing data.

In a possible implementation, that the sensing network element generates the second sensing data based on the first sensing data and the 3GPP sensing data includes: The sensing network element processes the first sensing data and the 3GPP sensing data based on the fourth sensing requirement information, to generate the second sensing data.

In a possible implementation, the sensing request message includes the fourth sensing requirement information.

In a possible implementation, one or more of the first sensing requirement information, the second sensing requirement information, the third sensing requirement information, and the fourth sensing requirement information include one or more of the following information: a required sensing area; a required sensing capability indicator; fusion requirement information, indicating to fuse N3GPP sensing data and 3GPP sensing data, and/or indicating a required fusion indicator of N3GPP sensing data and 3GPP sensing data; a required sensing type; and sensing service information, where the sensing service information is for determining one or more of the required sensing area, the required sensing capability indicator, the fusion requirement information, and the required sensing type.

In a possible implementation, the sensing server may further send, to the first device, an address and/or data label information that are/is for receiving the first sensing data; and the receiving the first sensing data from the first device includes: The sensing server from the first device receives the first sensing data whose destination address is the address; or the sensing server receives, from the first device, the first sensing data that includes the data label information.

For beneficial effects of the third aspect and the possible implementations of thereof, refer to the descriptions of the beneficial effects of the first aspect and the corresponding implementations thereof. Repeated parts are not described again.

According to a fourth aspect, a communication apparatus is provided. The apparatus may implement the method according to any one of the first aspect to the third aspect and any possible implementation of thereof. The apparatus possesses a function of the sensing network element, the first device, or the sensing server. For example, when the method shown in the first aspect is implemented, the apparatus is, for example, a sensing network element or a functional module in the sensing network element, or may be a processor in the sensing network element. For another example, when the method shown in the second aspect and any possible implementation thereof is implemented, the apparatus is, for example, a first device, or a sensing module or a processor in the first device. For another example, when the method shown in the third aspect and any possible implementation thereof is implemented, the apparatus is, for example, a sensing network element or a sensing server, or may be a functional module in the sensing network element or a functional module in the sensing server, or a component like a processor in the sensing network element or the sensing server.

In an optional implementation, the apparatus may include modules that one-to-one correspond to the methods/operations/steps/actions described in any one of the first aspect to the third aspect and any possible implementation thereof. The module may be a hardware circuit or software, or may be implemented by the hardware circuit in combination with the software. In an optional implementation, the apparatus includes a processing unit (sometimes also referred to as a processing module) and a communication unit (sometimes also referred to as a transceiver module, a communication module, or the like). A transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

For example, when the apparatus is configured to perform the method according to any one of the first aspect to the third aspect and any possible implementation thereof, the apparatus may include the communication unit and the processing unit.

According to a fifth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method performed by the sensing network element, the first device, or the sensing server in any one of the first aspect to the third aspect and any possible implementation of thereof.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a sixth aspect, a computer-readable storage medium is provided. The computer-readable storage medium is configured to store a computer program or instructions. When the computer program or the instructions are run, the method according to any one of the first aspect to the third aspect and any possible implementation thereof is implemented.

According to a seventh aspect, a computer program product including instructions is provided. When the computer program product runs on a computer, the method according to any one of the first aspect to the third aspect and any possible implementation thereof is implemented.

According to an eighth aspect, an embodiment of this application further provides a communication apparatus, configured to perform the method according to any one of the first aspect to the third aspect and any possible implementation thereof.

According to a ninth aspect, a chip system is provided. The chip system includes a logic circuit (which may alternatively be understood as that the chip system includes a processor, and the processor may include the logic circuit, and the like), and may further include an input/output interface. The input/output interface may be configured to input a message, or may be configured to output a message. The input/output interface may be a same interface. That is, the same interface can implement both a sending function and a receiving function. Alternatively, the input/output interface includes an input interface and an output interface. The input interface is configured to implement a receiving function, that is, is configured to receive a message. The output interface is configured to implement a sending function, that is, is configured to send a message. The logic circuit may be configured to perform an operation in the method according to any one of the first aspect to the third aspect and any possible implementation thereof other than the transceiver function. The logic circuit may be further configured to transmit a message to the input/output interface, or receive, from the input/output interface, a message from another communication apparatus. The chip system may be configured to implement the method according to any one of the first aspect to the third aspect and any possible implementation thereof. The chip system may include a chip, or may include the chip and another discrete device.

Optionally, the chip system may further include a memory, and the memory may be configured to store instructions. The logic circuit may invoke the instructions stored in the memory, to implement a corresponding function.

According to a tenth aspect, a communication system is provided. The communication system may include a sensing network element and a first device. The sensing network element may be configured to perform the method shown in the first aspect and any possible implementation thereof, and the first device may be configured to perform the method shown in the second aspect and any possible implementation thereof. Alternatively, the communication system may include a sensing network element, a sensing server, and a first device. The sensing network element and the sensing server may be configured to perform the method shown in the third aspect and any possible implementation thereof, and the first device may be configured to perform the method shown in the second aspect and any possible implementation thereof.

For technical effect brought by the fourth aspect to the tenth aspect, refer to the descriptions of the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of an architecture of another wireless communication system according to an embodiment of this application;
FIG. 3 is a diagram of an architecture of another wireless communication system according to an embodiment of this application;
FIG. 4 is a diagram of an architecture of another wireless communication system according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of another communication apparatus according to an embodiment of this application.

### DESCRIPTION OF EMBODIMENTS

The technical solutions provided in embodiments of this application may be applied to various communication systems. For example, the technical solutions may be applied to an LTE system or a 5G system, and may also be applied to another future-oriented new system. This is not specifically limited in embodiments of this application. In addition, terms "system" and "network" are interchangeable with each other. The following merely uses an architecture of the 5G communication system as an example for description.

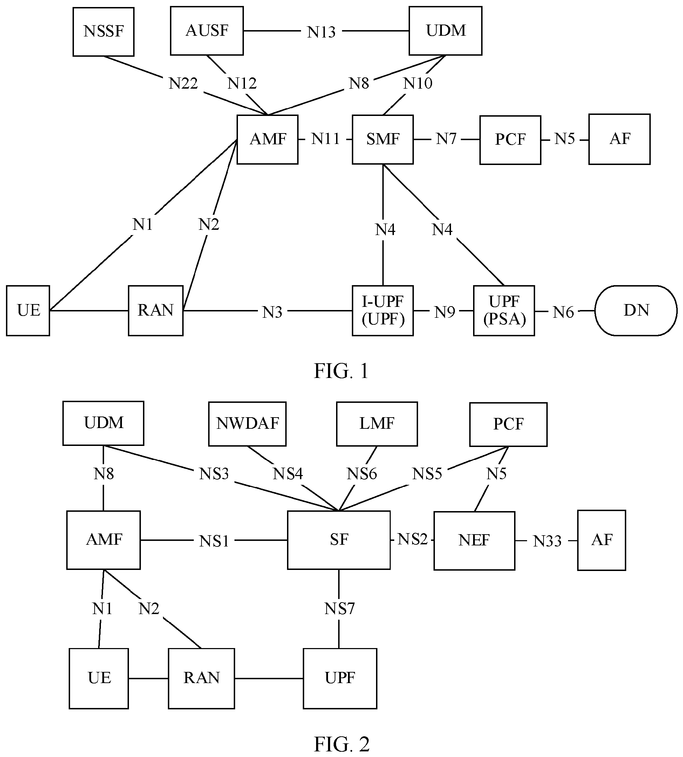

FIG. 1 shows a 5G communication system formulated in the 3rd generation partnership project (3rd generation partnership project, 3GPP) standard. The communication system includes a terminal device (for example, user equipment (user equipment, UE)), an access network (access network, AN) (for example, a radio access network (radio access network, RAN)), a core network (core network, CN), and a data network (data network, DN). Logically, network elements of the core network may be divided into two parts: a user plane and a control plane. The control plane is responsible for mobile network management, and the user plane is responsible for service data transmission.

The terminal device is an entrance for interaction between a mobile user and a network, and can provide a basic computing capability and a storage capability, display a service window to the user, and receive a user operation input. A next generation terminal device (NextGen UE) may set up a signal connection and a data connection to the RAN by using a new radio technology, to transmit a control signal and service data to the mobile network. The terminal device may include various handheld devices, vehicle-mounted devices, wearable devices, or compute devices that have a wireless communication function, other processing devices connected to a wireless modem, and various forms of terminals, such as a mobile station (mobile station, MS), a terminal (terminal), and a soft terminal, for example, a water meter, an electricity meter, or a sensor.

The RAN is deployed near the terminal device, provides a network access function for an authorized user in a specific area, and can determine transmission tunnels with different quality based on a user level, a service requirement, and the like to perform user data transmission. The RAN can manage a resource thereof, appropriately use the resource, and provide an access service for the terminal device as required, and is responsible for forwarding the control signal and user data between the terminal device and the core network.

The core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device is detached; and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device.

The data network (data network, DN) is a data network that provides a service for a user. Generally, a client is located in the terminal device, and a server is located in the data network. The data network may be a private network, for example, a local area network, may be an external network that is not managed or controlled by an operator, for example, the internet (internet), or may be a dedicated network jointly deployed by operators, for example, a network that provides an internet protocol (internet protocol, IP) multimedia core network subsystem (IP multimedia core network subsystem, IMS) service.

The core network user plane includes a user plane function (user plane function, UPF). The core network control plane includes an access and mobility management function (access and mobility management function, AMF), a session management function (session management function, SMF), a network exposure function (network exposure function, NEF), a network function repository function (NF repository function, NRF), a unified data repository (unified data repository, UDR) network element, a unified data management (unified data management, UDM) network element, a policy control function (policy control function, PCF), an application function (application function, AF), an authentication server function (authentication server function, AUSF), a network slice selection function (network slice selection function, NSSF), a location management function (location management function, LMF), a network slice-specific authentication and authorization function (network slice-specific authentication and authorization function, NSSAAF), and the like.

The core network control plane uses a service-oriented architecture. The control plane network elements interact with each other in a service invoking manner instead of a point-to-point communication manner in a conventional architecture. In the service-oriented architecture, a control plane network element exposes a service to another control plane network element, so that the another control plane network element invokes the service. In point-to-point communication, a communication interface between the control plane network elements stores a set of specific messages, and the messages can be used only by the control plane network elements at two ends of the interface during communication.

The following describes functions of functional entities in the core network.
1. A session management network element is mainly for session management, assignment and management of an IP address of the terminal device, selection and control of a user equipment plane function, termination of an interface toward a policy control or charging function, downlink data notification, and the like. In 5G communication, the session management network element may be an SMF network element. In future communication such as 6G communication, the session management function network element may still be the SMF network element or have another name. This is not limited in this application. Nsmf is a service-based interface provided by the SMF. The SMF may communicate with another network function through Nsmf.
2. An access management network element, also referred to as an access and mobility management network element, is mainly for mobility management, access management, and the like. For example, the access management network element may be a mobility management entity (mobility management entity, MME) function in a 4G communication network or an AMF network element in a 5G network. In future communication such as 6G communication, the access management network element may still be the AMF network element or have another name. This is not limited in this application. Namf is a service-based interface provided by the AMF. The AMF may communicate with another network function through Namf.
3. A network exposure network element is configured to securely expose, to the outside, a service and a capability that are provided by a 3GPP network function, and so on. In 5G communication, the network exposure network element may be a NEF network element. In future communication such as 6G communication, a network exposure function network element may still be the NEF network element or have another name. This is not limited in this application. Nnef is a service-based interface provided by the NEF. The NEF may communicate with another network function through Nnef.
4. A network repository network element is configured to: provide service registration, discovery, and authorization, and maintain available network function (network function, NF) instance information, to implement on-demand configuration of a network function and a service and interconnection between NFs. In 5G communication, the network repository network element may be an NRF network element. In future communication such as 6G communication, a network repository function network element may still be the NRF network element or have another name. This is not limited in this application. Nnrf is a service-based interface provided by the NRF. The NRF may communicate with another network function through Nnrf.
5. A policy control network element is configured to: provide a unified policy framework for governing network behavior, provide policy rule information for a control plane function network element (for example, the AMF or the SMF), and so on. In 5G communication, the policy control network element may be a PCF network element. In future communication such as 6G communication, the policy control network element may still be the PCF network element or have another name. This is not limited in this application. Npcf is a service-based interface provided by the PCF. The PCF may communicate with another network function through Npcf.
6. A data management network element is for user identifier processing, subscription, access authentication, registration, mobility management, or the like. In 5G communication, the data management network element may be the UDM network element. In future communication such as 6G communication, the data management network element may still be the UDM network element or have another name. This is not limited in this application. Nudm is a service-based interface provided by the UDM. The UDM may communicate with another network function through Nudm.
7. An application function network element is configured to perform application-affected data routing, access the network exposure function, interact with a policy framework to perform policy control, or the like. In 5G communication, the application function network element may be an AF network element. In future communication such as 6G communication, the application function network element may still be the AF network element or have another name. This is not limited in this application. Naf is a service-based interface provided by the AF. The AF may communicate with another network function through Naf. The AF may be a third-party functional entity or an application server deployed by an operator.
8. A user plane network element is for packet routing and forwarding, quality of service (quality of service, QoS) handling for user plane data, or the like. In 5G communication, the user plane network element may be a user plane function (user plane function, UPF) network element. In future communication such as 6G communication, the user plane network element may still be the UPF network element or have another name. This is not limited in this application.
9. An authentication service network element is mainly for user authentication or the like. In 5G communication, the authentication service network element may be an AUSF network element. In future communication such as 6G communication, the authentication service network element may still be the AUSF network element or have another name. This is not limited in this application. Nausf is a service-based interface provided by the AUSF. The AUSF may communicate with another network function through Nausf.
10. A network slice selection function network element is configured to select a network slice for the terminal device. In 5G communication, the network slice selection function network element may be an NSSF network element. In future communication such as 6G communication, the network slice selection function network element may still be the NSSF network element or have another name. This is not limited in this application.

It may be understood that the core network may further include another network element. This is not limited in this application.

It should be noted that the names of the network elements and the interfaces between the network elements in FIG. 1 are merely an example. During specific implementation, there may be other names of the network elements and the interfaces between the network elements. This is not specifically limited in embodiments of this application.

As shown in FIG. 1, the terminal device may access the 5G system via an access network device, for example, the RAN, the terminal device may communicate with the AMF network element through a next generation (Next generation, NG) 1 network interface (N1 for short), the access network device communicates with the AMF network element through an N2 interface (N2 for short), the access network device communicates with the UPF network element through an N3 interface (N3 for short), the AMF network element communicates with the SMF network element through an N11 interface (N11 for short), the AMF network element communicates with the UDM network element through an N8 interface (N8 for short), the AMF network element communicates with the AUSF network element through an N12 interface (N12 for short), the AMF network element communicates with the PCF network element through an N15 interface (N15 for short), the SMF network element communicates with the PCF network element through an N7 interface (N7 for short), the SMF network element communicates with the UPF network element through an N4 interface (N4 for short), the NEF network element communicates with the SMF network element through an N29 interface (N29 for short), and the UPF network element accesses the data network (data network, DN) through an N6 interface (N6 for short).

It should be noted that the names of the network elements and the interfaces between the network elements in FIG. 1 are merely an example. During specific implementation, there may be other names of the network elements and the interfaces between the network elements. This is not specifically limited in embodiments of this application.

The access network device may be an access device that accesses a communication system in a wireless manner, may be configured to provide a wireless access function for the terminal device, and may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation base station in a 6th generation (6th generation, 6G) mobile communication system, a base station in a future mobile communication system, an access node in a Wi-Fi system, a long range radio (long range radio, LoRa) system, or a vehicle-to-everything system, or the like. Alternatively, the access network device may be a module or a unit that completes some functions of a base station.

In some deployment, the access network device may include a central unit (central unit, CU) and a distributed unit (distributed unit, DU), or include a remote radio unit (remote radio unit, RRU) and an active antenna unit (active antenna unit, AAU). The access network device may further include a radio unit (radio unit, RU). The CU implements some functions of the access network device, and the DU implements some functions of the access network device. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PDCP layer signaling may also be considered as being sent by the DU or sent by the DU and the RU. It may be understood that a network device may be a CU node, a DU node, or a device including the CU node and the DU node. In addition, the CU may be classified as a network device in the access network RAN, or the CU may be classified as a network device in the core network CN. This is not limited herein.

The access network device may further include an active antenna unit (active antenna unit, AAU) and/or a baseband unit (baseband unit, BBU). The BBU is mainly responsible for baseband signal processing. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the access network device may be a device including one or more of a CU node, a DU node, or an AAU node.

In addition, a core network element may further include a sensing function (sensing function, SF) network element, which is referred to as an SF for short. The SF may perform sensing by using the access network device and/or the terminal device. It may be understood that sensing in this application includes 3GPP sensing and N3GPP sensing, and a current SF mainly relates to 3GPP sensing.

Optionally, the SF may be co-deployed with another network element, a function of the SF may be specifically implemented by another network element, or the SF may be separately disposed. This is not limited in embodiments of this application. The SF may also be referred to as a sensing control (sensing control function, SCF) network element or another possible name. Optionally, the SF may alternatively be deployed in a non-core network. This is not limited in embodiments of this application.

As shown in FIG. 2, sensing control signaling between an SF and an access network device and/or a terminal device is transferred via an AMF. Sensing measurement data obtained by the access network device/terminal device may be transmitted to the SF through a control plane or a user plane. The user plane may transmit the sensing measurement data through forwarding via a UPF or directly to the SF. In addition, the terminal device further needs to be supported in performing sensing, and the access network device further needs to be supported in performing sensing charging in a sensing scenario.

Optionally, as shown in FIG. 2, interfaces are disposed between the SF and core network elements such as the AMF, a NEF, a UDM, an NWDAF, a PCF, and the UPF for interaction. Specific definitions are as follows:

NS1: An NS1 interface is disposed between the SF and the AMF. The interface may be for transferring the sensing control signaling. In a scenario in which the sensing measurement data is transferred on the control plane, the interface may also be for transferring the sensing measurement data.

NS2: An NS2 interface is disposed between the SF and the NEF. The interface may be for transferring a signaling message that is exchanged between the SF and an AF on a service side and that is transited via the NEF and exposing sensing information to the AF.

NS3: An NS3 interface is disposed between the SF and the UDM. Through the interface, authentication or authorization may be implemented, and terminal device sensing subscription information, serving AMF information, or other information is obtained.

NS4: An NS4 interface is disposed between the SF and the NWDAF. Through the interface, the SF and the NWDAF may jointly complete artificial intelligence (artificial intelligence, AI) processing related to a sensing service.

NS5: An NS5 interface is disposed between the SF and the PCF. Through the interface, the SF may transfer a sensing requirement of the sensing service, a QoS requirement, the sensing information, or other messages or signaling to the PCF, and the PCF determines and generates a policy and charging control (policy and charging control, PCC) policy related to the sensing service.

NS6: An NS6 interface is disposed between the SF and the user plane function. The sensing measurement data may be directly transmitted by the access network device to the SF via the user plane function, or may be indirectly forwarded to the SF via the UPF. If the sensing measurement data is forwarded via the UPF in a scenario in which the access network device performs sensing, the UPF needs to be reconstructed to support data transmission at a granularity of the access network device.

In addition to the foregoing disposed interfaces, existing communication interfaces (for example, N1, N2, N5, N8, and N33) may also support transferring of information related to the sensing service, for example, authentication information, a type of the sensing service, a quality requirement of the sensing service, the sensing measurement data, or the sensing information.

In addition, the SF may also be connected to an LMF through an interface. In addition, the SF may also be co-deployed with the LMF.

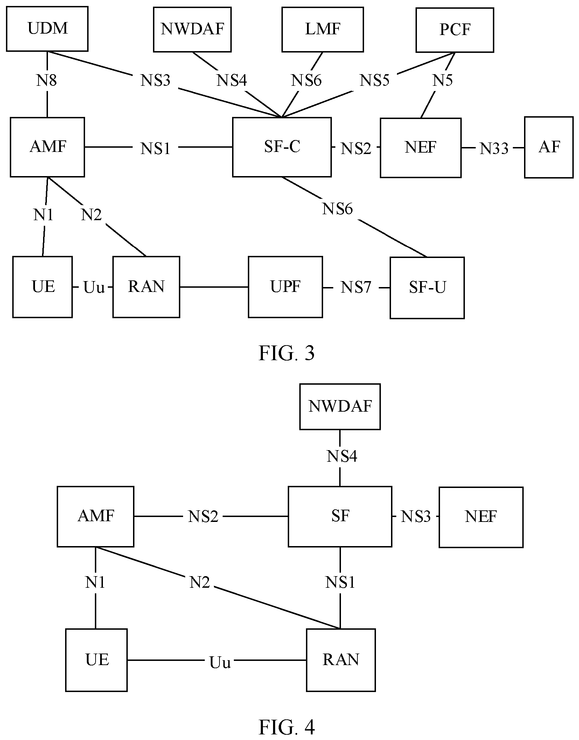

In addition, as shown in FIG. 3, when a control plane-user plane separation architecture is used for an SF, there is an SF-control plane (SF-control plane, SF-C) network element and an SF-user plane (SF-user plane, SF-U) network element. The SF-C network element may be referred to as an SF-C for short, and the SF-U network element may be referred to as an SF-U for short. It may be understood that when the control plane-user plane separation architecture is used for the SF, the SF-U may be configured to process sensing data, for example, generate or obtain sensing information based on sensing data provided by the access network device; and the SF-C may be configured to process other control plane signaling, for example, obtain a sensing request, or is used by the SF to perform signaling and data exchange and transmission with another network element.

As shown in FIG. 4, an SF may also be connected to an access network device through an NS1 interface.

An SF may obtain a sensing requirement from a sensing service requesting device (in other words, a requirement party or a requester). The sensing service requesting device may be an AF network element, an external application server (application server, AS), an access network device, or a terminal device. After obtaining the sensing requirement, the SF may control an execution object of the sensing service to sound and/or collect sensing data. The execution object of the sensing service may include one or more access network devices and/or one or more terminal devices. A sensing requirement of the AF or the AS may be sent to the SF via a NEF.

An example in which an execution object of 3GPP sensing measurement is the access network device is used. The access network device may perform a 3GPP sensing operation, to obtain the sensing data. For example, the sensing operation may include sending a sensing signal and receiving an echo signal. The sensing signal is a signal for sensing (or sounding) a sensed object (also referred to as a target object), and the sensing signal is also referred to as a sounding signal, a linear frequency-modulated signal, an optical frequency division multiplexing (optical frequency division multiplexing, OFDM) wave, a frequency-modulated continuous wave (frequency-modulated continuous wave, FMCW), or the like. The echo signal is a reflected signal of the target object for the sensing signal. For example, the access network device may perform specific processing based on the echo signal, to generate (or determine or obtain) the sensing data. After obtaining the sensing data through sounding, the access network device may send the sensing data to the SF. The SF processes the sensing data, to obtain sensing information; and provides the sensing information for the sensing service requesting device. The sensing information may also be referred to as a sensing result. For example, the SF may process the sensing data based on the sensing requirement of the sensing service requesting device, to obtain the sensing information.

The sensing data includes, for example, point cloud data captured/collected/obtained by the access network device and/or the terminal device. The sensing data may include at least one of the following information: a speed, a distance, an angle, coordinates, time, energy, and the like. In other words, the sensing data provided by the access network device for the SF may be specifically the point cloud data, or may be the foregoing information, for example, the speed and the distance, obtained by processing the point cloud data by the access network device and/or the terminal device. The coordinates in this application may include longitude and latitude and/or geographic coordinates. The time in this application may include a time stamp of data of each sampling point. The energy in this application may include echo energy included in the data of the sampling point. The sensing information may be obtained based on point cloud information by using a data processing method such as cluster analysis. The sensing information may include whether there is an object, an object type, an object quantity, an object characteristic (for example, a shape), a trajectory, a position, a speed, a direction/an angle, environment reconstruction (environmental reconstruction) or environment imaging, a multi-object position relationship, whether the object intrudes a specific area, whether the object deviates from a preset trajectory, whether a distance between objects is less than a specific threshold, whether a plurality of objects have a collision risk, and the like.

The access network device may provide the sensing data for the SF in a plurality of manners. In a possible implementation, the SF may set up a sensing data transmission channel for the access network device, so that the access network device may send the sensing data to the SF through the sensing data transmission channel. Further, the SF processes the sensing data based on the sensing requirement, to obtain the sensing information; and sends the sensing information to the sensing service requesting device. For example, the sensing data transmission channel may include a channel between the access network device and a UPF network element, a channel between the UPF network element and the SF, and a channel between the SF and the sensing service requesting device. In other words, a sensing data transmission path may be as follows: The access network device sends the sensing data to the UPF network element, and the SF obtains the sensing information based on the sensing data, and then sends the sensing information to the sensing service requesting device. In the transmission path, data represents data transmission or processing. For example, in the transmission path in the foregoing example, another network element may be further included between network elements. For example, the NEF or another possible network element may be further included between the SF and the sensing service requesting device. This is not specifically limited. In embodiments of this application, a specific implementation of setup of the sensing data transmission channel is not limited, and "channel" may alternatively be replaced with "tunnel" or another possible name.

It may be understood that the SF in the transmission path may be replaced with a sensing data processing function network element or a sensing function network element. In other words, the sensing data processing function network element may convert the sensing data into sensing information that can be sent to the sensing service requesting device. Specifically, the SF may set up the sensing data transmission channel for the access network device, so that the access network device may send the sensing data to the SF. Further, the SF processes the sensing data based on the sensing requirement, to obtain the sensing information; and sends the sensing information to the sensing service requesting device. In other words, the sensing data transmission path may be as follows: The access network device captures the sensing data, and sends the sensing data to the UPF. The UPF sends the sensing data to the SF. The SF obtains the sensing information based on the sensing data, and then sends the sensing information to the sensing service requesting device.

In addition, with continuous enrichment of sensing scenarios, limited by coverage of a sensing device, a device capability, and an upper limit of accuracy that can be achieved by a technology, sensing accuracy based on 3GPP sensing that is a monotonous sensing technology may not satisfy requirements of application and services. Therefore, a combination of N3GPP sensing and 3GPP sensing is considered to improve sensing performance.

In this application, N3GPP sensing may include sensing performed by using devices such as a camera, radar, wireless fidelity (wireless fidelity, Wi-Fi), Bluetooth, Zigbee (Zigbee), near field communication (near field communication, NFC), a temperature sensor, and a humidity sensor. In N3GPP sensing, the sensing device may be configured to perform N3GPP sensing measurement, to obtain the sensing data. For example, in a scenario in which the radar performs N3GPP sensing measurement, the radar is an N3GPP sensing device, and the radar may be configured to: send a radar signal, and perform sensing measurement based on an echo signal of the radar signal. A specific manner of performing N3GPP sensing measurement and obtaining N3GPP sensing data is not required in this application.

To improve sensing performance, this application provides a communication method, to obtain N3GPP sensing data, thereby improving 3GPP sensing performance by using the N3GPP sensing data.

The communication method shown in this application may be performed by a sensing network element and a device supporting an N3GPP sensing capability. The sensing network element may be configured to request, indicate, or control the device supporting an N3GPP sensing capability to perform N3GPP sensing. The device supporting an N3GPP sensing capability may perform N3GPP sensing, and provide the N3GPP sensing data for the sensing network element.

In this application, the sensing network element may be an SF or a sensing server, or a function of the sensing network element may be implemented by two entities: an SF and a sensing server. The sensing server may be a server configured to support or provide a sensing service, for example, an AS, an AF, a cloud platform, or an edge platform configured to support or provide the sensing service.

In addition, the device supporting an N3GPP sensing capability may include a device having an N3GPP sensing capability and/or a device connected to the device having/possessing an N3GPP sensing capability. The device having an N3GPP sensing capability is a device that supports N3GPP sensing measurement and obtains the N3GPP sensing data.

For example, the device supporting an N3GPP sensing capability may be a 3GPP device, or may include the 3GPP device and an N3GPP device. The 3GPP device supports access to a network in a 3GPP manner, to be connected to the sensing network element. The 3GPP device is, for example, a terminal device or an access network device.

The N3GPP device may possess an N3GPP sensing capability, and the N3GPP device may not support access to the network in the 3GPP manner, but can only be connected, by using a 3GPP device connected to the N3GPP device, to the sensing network element or a network connection in which the sensing network element is located. For example, the N3GPP device may be connected to the 3GPP device in the 3GPP manner and/or an N3GPP manner, for example, in a wired manner or through Bluetooth. The N3GPP device may perform N3GPP sensing by using a camera, radar, Wi-Fi, Bluetooth, Zigbee, NFC, a temperature sensor, a humidity sensor, and the like, and provide the sensing data for the 3GPP device. Then, the 3GPP device provides the N3GPP sensing data for the sensing network element.

In a possible case, the 3GPP device may possess the N3GPP sensing capability. Therefore, when the 3GPP device is not connected to the N3GPP device, the 3GPP device possessing the N3GPP sensing capability may be used as the device having an N3GPP sensing capability. In another possible case, a 3GPP device having the N3GPP sensing capability may be further connected to the N3GPP device. That is, the N3GPP device may be used as the device having an N3GPP sensing capability, and the 3GPP device is further used as the device connected to the device (namely, the N3GPP device) having an N3GPP sensing capability. In this case, devices supporting an N3GPP sensing capability are the 3GPP device and the N3GPP device. In another possible case, when the 3GPP device does not possess the N3GPP sensing capability, and the 3GPP device is connected to the N3GPP device, the 3GPP device may be used as the device connected to the device having an N3GPP sensing capability. That is, in this case, the device supporting an N3GPP sensing capability may be the device having an N3GPP sensing capability.

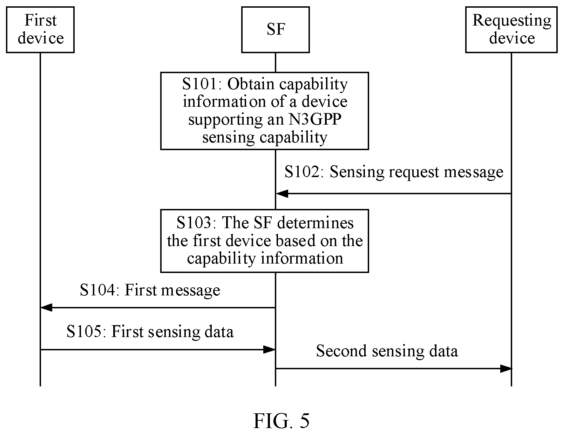

As shown in FIG. 5, an example in which a sensing network element is an SF is used. A communication method provided in this application may include the following steps.

S101: The SF obtains capability information of a device supporting an N3GPP sensing capability.

In the following descriptions, the capability information of the device supporting an N3GPP sensing capability is referred to as capability information for short.

It may be understood that the capability information in this application may include capability information of a device possessing an N3GPP sensing capability. Therefore, when a 3GPP device possesses an N3GPP sensing capability, the capability information reported by the 3GPP device may include capability information of the 3GPP device; and/or when a 3GPP device is connected to an N3GPP device, the capability information reported by the 3GPP device is capability information of the N3GPP device. In other words, when the device supporting an N3GPP sensing capability is the 3GPP device, the capability information may include the capability information of the 3GPP device. When devices supporting an N3GPP sensing capability are the 3GPP device and the N3GPP device, the capability information may include the capability information of the 3GPP device and the capability information of the N3GPP device. It may be understood that the 3GPP device and the N3GPP device may be collectively referred to as devices.

Optionally, the capability information may include one or more of the following information:
(1) Indication indicating whether the N3GPP sensing capability is supported. The indication may indicate whether the 3GPP device and/or the N3GPP device support/supports the N3GPP sensing capability. For example, when the 3GPP device is not connected to the N3GPP device, if the 3GPP device supports the N3GPP sensing capability, the capability information reported by the 3GPP device may carry an indication indicating that the N3GPP sensing capability is supported; or when the 3GPP device does not support the N3GPP sensing capability, the capability information may carry an indication indicating that the N3GPP sensing capability is not supported. For another example, when the 3GPP device is connected to one or more N3GPP devices, because the N3GPP device supports the N3GPP sensing capability, the capability information may carry an indication indicating that the N3GPP sensing capability is supported.
   For example, the capability information may include, as the indication, a field indicating whether the N3GPP sensing capability is supported. For example, the field may include one bit. When a value thereof is 0, it may indicate that the N3GPP sensing capability is not supported. When a value thereof is 1, it indicates that the N3GPP sensing capability is supported.
   The indication indicating whether the N3GPP sensing capability is supported may be used as mandatory content of the capability information reported by the 3GPP device.
(2) Position information, also referred to as a position for short, which may indicate a position of the 3GPP device and/or a position of the N3GPP device. The position information may include geographic coordinate information or area information. For example, the geographic coordinate information may be the position of the 3GPP device and/or the position of the N3GPP device that are/is represented by using longitude and latitude information and/or distance information. For another example, the area information is information about or an identifier (for example, a cell identity, a tracking area identity (tracking area ID, TAI), or an access network device identifier) of a 3GPP area in which the 3GPP device is located and/or information about or an identifier (for example, a cell identity, a tracking area identity (tracking area ID, TAI), or an access network device identifier) of a 3GPP area in which the N3GPP device is located.
(3) Supported sensing area, which may indicate an area in which the 3GPP device supports sensing and/or an area in which the N3GPP device supports sensing. For example, the area includes a 3GPP sensing area and/or an N3GPP sensing area in which the 3GPP device supports sensing, and/or includes an N3GPP sensing area in which the N3GPP device supports sensing. The sensing area may be represented by using geographic scope information and/or area information. For example, the geographic scope information may be an area scope represented by using longitude and latitude information and/or distance information. The area information may be information about or an identifier of a 3GPP area in which a sensing scope of the 3GPP device is located and/or information about or an identifier of a 3GPP area in which a sensing scope of the N3GPP device is located. For example, the area information is information such as a cell identity list, a TRP identifier list, a CU identifier list, a DU identifier list, an RRU identifier list, an AAU identifier list, an access network device identifier, or a TAI list. In this application, the list may include one or more pieces of information. For example, the cell identity list may include one or more cell identities.
   It may be understood that there is a specific association between the position information and the supported sensing area. Therefore, the sensing area supported by the device may be deduced based on the position information of the device. In addition, when the capability information includes the area information, the area information may represent both the position information and the supported sensing area.
(4) Supported sensing type, which may indicate a sensing type supported by the 3GPP device and/or a sensing type supported by the N3GPP device, for example, may indicate that 3GPP sensing is supported, and/or indicate that N3GPP sensing is supported.
   In addition, if N3GPP sensing is supported, the sensing type may indicate an N3GPP sensing type supported by the 3GPP device and/or an N3GPP sensing type supported by the N3GPP device. For example, the supported N3GPP sensing type may indicate that N3GPP sensing performed by using a camera is supported, that N3GPP sensing performed by using radar is supported, or that another type of N3GPP sensing is supported. In this case, the supported sensing type may not explicitly indicate that N3GPP sensing is supported, but indicate, by indicating a specific supported N3GPP sensing type, that N3GPP sensing is supported.
   The supported sensing type may include a field or information corresponding to the sensing type, where the field or the information implicitly indicates the supported sensing type. For example, a field 00 indicates that 3GPP sensing is supported, a field 01 indicates that N3GPP sensing is supported, and a field 10 indicates that 3GPP sensing and N3GPP sensing are supported. In addition, when N3GPP sensing is supported, an additional field may further indicate the supported N3GPP sensing type. For example, a bitmap (bitmap) indicates a supported or not supported type in a plurality of N3GPP sensing types.
(5) Supported sensing capability indicator, which may also be referred to as sensing capability key performance indicator (key performance indicator, KPI). The supported sensing capability indicator may indicate 3GPP sensing performance and/or N3GPP sensing performance supported by the 3GPP device, and/or the supported sensing capability indicator may also indicate N3GPP sensing performance supported by the N3GPP device. The supported sensing performance may indicate a performance parameter like supported sensing accuracy. For example, if the 3GPP device and/or the N3GPP device support/supports N3GPP sensing, the sensing capability indicator may include a parameter like a pixel, resolution, or a rotation angle of the camera, or may include a performance parameter like radar accuracy.
(6) Supported sensing data fusion capability information, which may indicate whether the 3GPP device and/or the N3GPP device support/supports fusion of N3GPP sensing data and 3GPP sensing data; and when data fusion is supported, may indicate a data fusion indicator supported by the 3GPP device and/or a data fusion indicator supported by the N3GPP device.

The data fusion indicator may indicate levels (levels) at which data fusion is performed, that is, indicates levels, where fusion of sensing data at the levels is supported. The level may alternatively be replaced with a protocol layer or accuracy. For example, the data fusion indicator may indicate that data fusion at a point cloud data layer is supported. That is, operations such as deduplication and noise reduction are performed on original N3GPP sensing data and 3GPP sensing data, to obtain point cloud data in a three-dimensional coordinate form, and the point cloud data in the three-dimensional coordinate form is fused. For example, merging processing is performed on N3GPP point cloud data in the three-dimensional coordinate form and 3GPP point cloud data in the three-dimensional coordinate form. For another example, the data fusion indicator may indicate that fusion at a sensing object (object) drawing layer (for example, a two-dimensional or three-dimensional image display layer) is supported. For example, cluster analysis is performed on N3GPP point cloud data to obtain an analysis result at an object layer, and cluster analysis is separately performed on 3GPP point cloud data to obtain an analysis result or a sensing result at the object layer. Then, the analysis results are merged to obtain, for example, two-dimensional or three-dimensional image layer data. It may be understood that sensing information or data at the sensing object (object) drawing layer may be sensing information or data obtained by performing a processing process such as cluster analysis on point cloud data.

In an example, data fusion at the point cloud data layer is fusion of the point cloud data in the three-dimensional coordinate form. As shown in Table 1, the point cloud data in the three-dimensional coordinate form may include an information element (information element, IE) or an information group (group) shown in Table 1.

**Table 1**

| IE/Information group name | Semantics description (semantics description) |
|---|---|
| > Measurement response item | |
| >> Range (range) | A range scope is, for example, 0 to 500 m |
| >> Azimuth angle (azimuth angle) | An azimuth scope is, for example, 0 to 120.0 degrees |
| >> Elevation angle (elevation angle) | An elevation scope is, for example, 0 to 30.0 degrees |
| >> Velocity (velocity) | A velocity scope is, for example, 0 to 180.0 kilometers per hour |
| >> Direction (direction) | Radial velocity direction (far away from/close to a receiver) |
| >>> Velocity direction azimuth angle | A velocity direction azimuth angle scope is, for example, 0 to 360.0 degrees |
| >>> Velocity direction elevation angle | A velocity direction elevation angle scope is, for example, 0 to 30.0 degrees |
| > Time stamp (time stamp) | |

During fusion of the point cloud data in the three-dimensional coordinate form, the point cloud data in the three-dimensional coordinate form may be obtained based on the 3GPP sensing data and the N3GPP sensing data respectively, and then the point cloud data in the three-dimensional coordinate form is fused.

In another example, fusion of the point cloud data at the object drawing layer may be, for example, fusion of measurement results such as whether there is an object, an object type, an object quantity, an object characteristic, a trajectory, a position, a speed, a direction/an angle, environment reconstruction or environment imaging, a multi-object position relationship, whether the object intrudes a specific area, whether the object deviates from a preset trajectory, whether a distance between objects is less than a specific threshold, and whether a plurality of objects have a collision risk.

The trajectory is used as an example. Fusion of the point cloud data at the object drawing layer may be fusion of one or more pieces of information shown in Table 2.

**Table 2**

| IE/Information group name | Semantics description (semantics description) |
|---|---|
| > Measurement response item | |
| >> Identifier (identifier, ID) | Identifier of a sensed target object |
| >> Position (position) | Absolute coordinates of the target object |
| >> Type (type) | Type of the target object, which may include one or more possible types of the target object |
| >> Confidence level (probability) | Confidence probability of the type of the target object |
| >> Data source (data source) | One or more sources of sensing data |
| >> Speed (speed) | Unit: kilometers per hour |
| >>> Speed in an X direction (speed X) | Speed in an X-axis direction |
| >>> Speed in a Y direction (speed Y) | Speed in a Y-axis direction |
| >>> Speed in a Z direction (speed Z) | Speed in a Z-axis direction |
| >> Reflection cross-section (reflection cross-section, RCS) size | Unit: square meter |
| >> Size (size) | |
| >>> Length (length) | Length of the target object |
| >>> Width (width) | Width of the target object |
| >>> Height (height) | Height of the target object |
| >> Time stamp | |

In addition, the data fusion indicator may further indicate types, where fusion of data of the types is supported. For example, when only fusion of point cloud data captured by the camera and the 3GPP sensing data is supported, the data fusion indicator may indicate that only fusion of sensing data captured by the camera is supported.

(7) Supported sensing service information. The supported sensing service information indicates or is for determining a sensing service supported by the 3GPP device and/or a sensing service supported by the N3GPP device. The sensing service may correspond to, indicate, or be for determining one or more of the sensing area, a sensing type, a sensing capability indicator, and data fusion capability information that are supported by the 3GPP device and/or the sensing area, a sensing type, a sensing capability indicator, and data fusion capability information that are supported by the N3GPP device. For example, there is an association relationship between the sensing service information and one or more of the sensing area, the sensing type, the sensing capability indicator, and the data fusion capability information that are supported by the 3GPP device and/or the sensing area, the sensing type, the sensing capability indicator, and the data fusion capability information that are supported by the N3GPP device. Therefore, one or more of the sensing area, the sensing type, the sensing capability indicator, and the data fusion capability information that need to be supported by the 3GPP device and/or the sensing area, the sensing type, the sensing capability indicator, and the data fusion capability information that need to be supported by the N3GPP device may be deduced or determined based on the supported sensing service information. The association relationship may be predefined, may be indicated by a network element like the SF or a server, or may be indicated by the device supporting an N3GPP sensing capability. This is not specifically required in this application. Optionally, the sensing service information may include an identifier of the sensing service, device information, information about the N3GPP device, type information of the sensing service, or the like.

(8) Device identifier, which may identify the 3GPP device and/or the N3GPP device. The device identifier may include an identifier of the 3GPP device and/or an identifier of the N3GPP device. For example, when the 3GPP device is a terminal device, the device identifier may be a UE identifier of the terminal device, for example, a generic public subscription identifier (generic public subscription identifier, GPSI); or when the 3GPP device is an access network device, the device identifier may be an access network device identifier, an IP address, a control plane protocol address, or a user plane tunneling protocol address of the 3GPP device. Optionally, the device identifier may further include the identifier of the N3GPP device, to distinguish between different N3GPP devices, for example, a device MAC address, an address of a data link layer, namely, a layer 2 (layer 2, L2), or an SN number of the device.

Optionally, when the 3GPP device is connected to the N3GPP device, the capability information may carry the identifier of the 3GPP device and the identifier of the N3GPP device, which are respectively for marking the capability information of the 3GPP device and the capability information of the N3GPP device. For example, when the capability information includes a capability information set of the 3GPP device (for example, including an indication indicating whether the 3GPP device supports the N3GPP sensing capability, position information of the 3GPP device, the sensing area supported by the 3GPP device, the sensing type supported by the 3GPP device, the sensing data fusion capability information supported by the 3GPP device, the sensing capability indicator supported by the 3GPP device, and sensing service information supported by the 3GPP device) and a capability information set of the N3GPP device (for example, including an indication indicating whether the N3GPP device supports the N3GPP sensing capability, position information of the N3GPP device, the sensing area supported by the N3GPP device, the sensing type supported by the N3GPP device, the sensing data fusion capability information supported by the N3GPP device, the sensing capability indicator supported by the N3GPP device, and sensing service information supported by the N3GPP device), the capability information set of the 3GPP device may further include the identifier of the 3GPP device, and the capability information set of the N3GPP device may further include the identifier of the N3GPP device.

In an example of this application, regardless of whether N3GPP sensing is supported, the 3GPP device may send the capability information after going online or after a sensing capability changes. Going online may be that the 3GPP device is powered on or accesses a network in a 3GPP manner. In addition, the change of the sensing capability may be caused by a change of the N3GPP device connected to the 3GPP device, or may be caused by a change of sensing capability information such as a sensing area with which the 3GPP device registers, the position of the 3GPP device, the sensing capability indicator supported by the 3GPP device, or a fusion capability supported by the 3GPP device and/or a sensing area with which the N3GPP device registers, the position of the N3GPP device, the sensing capability indicator supported by the N3GPP device, or a fusion capability supported by the N3GPP device.

It may be understood that, in a possible case, the devices supporting an N3GPP sensing capability may include the 3GPP device and the N3GPP device. The 3GPP device may not possess the N3GPP sensing capability, but the one or more N3GPP devices connected to the 3GPP device possess the N3GPP sensing capability. In this case, the capability information reported by the 3GPP device includes the capability information of the N3GPP device. In addition, the capability information may further include an identifier of or information about (for example, a MAC address of) each N3GPP device, and/or an identifier of a 3GPP device supporting an N3GPP sensing capability.

Optionally, one device supporting an N3GPP sensing capability may be connected to a plurality of N3GPP devices. These N3GPP devices may support a same N3GPP sensing type, for example, all support radar sensing. In addition, sensing capabilities of these N3GPP devices may be the same or different. In addition, one device supporting an N3GPP sensing capability may also be connected to a plurality of N3GPP devices supporting different N3GPP sensing types. A type of the N3GPP device herein is an N3GPP sensing manner or type supported by the N3GPP device.

In another possible case, the 3GPP device may possess the N3GPP sensing capability, and the device supporting an N3GPP sensing capability is the 3GPP device. In this case, the capability information reported by the device supporting an N3GPP sensing capability may be N3GPP sensing capability information of the device supporting an N3GPP sensing capability.

Another possible case may be understood as a combination of the foregoing two cases. That is, the devices supporting an N3GPP sensing capability may include the 3GPP device and the N3GPP device. The 3GPP device not only supports the N3GPP sensing type, but also is connected to the one or more N3GPP devices. In this case, the capability information reported by the 3GPP device includes N3GPP sensing capability information of the 3GPP device and N3GPP sensing capability information of the one or more N3GPP devices connected to the 3GPP device. Optionally, in this case, the capability information may further include 3GPP sensing capability information of the 3GPP device.

In a possible implementation of S101, the SF may obtain the capability information from the 3GPP device and/or a capability information storage device. The capability information storage device may be a network element or device configured to collect and store the capability information. For example, the capability information storage device may be an application function, a UDM, a UDR, an N3GPP sensing capability repository function network element, or an AMF.

The N3GPP sensing capability repository function network element may also be referred to as an N3GPP sensing repository or an N3GPP-NRF. The N3GPP sensing capability repository function network element may be independent of an existing core network element such as the AMF, the UDR, the UDM, an NRF, or an AF, or may be co-deployed with an existing core network element like the NRF. This is not specifically limited. The 3GPP device may be predefined or preconfigured to report the capability information to the N3GPP sensing capability repository function network element.

Optionally, the SF may send, to the 3GPP device and/or the capability information storage device, a device request message which is also referred to as a sensing device request message. The sensing device request message is for requesting a device supporting an N3GPP sensing capability, and the request triggers the 3GPP device and/or the capability information storage device to send information about the device supporting an N3GPP sensing capability to the SF. For example, the information about the device includes the device identifier and the capability information of the device, where the device identifier is for distinguishing between different devices. In this case, the capability information may include at least one of the indication indicating whether the N3GPP sensing capability is supported, the position information, the supported sensing area, the supported sensing type, the supported sensing capability indicator, the supported sensing data fusion capability information, and the supported sensing service information. Alternatively, the information about the device may include the capability information. In this case, the capability information includes the device identifier for distinguishing between different devices. In addition, the capability information may further include at least one of the indication indicating whether the N3GPP sensing capability is supported, the position information, the supported sensing area, the supported sensing type, the supported sensing capability indicator, the supported sensing data fusion capability information, and the supported sensing service information, so that collected capability information or the device identifier is sent to the SF after the sensing device request message is received from the SF.

In addition, the SF may send, to the 3GPP device and/or the capability information storage device, a device subscription message which is also referred to as a sensing device subscription message. The sensing device subscription message may be for subscribing to the device supporting an N3GPP sensing capability. For example, if the 3GPP device has provided the capability information for the SF before, after the 3GPP device receives the sensing device subscription message, the 3GPP device may provide changed capability information for the SF when the sensing capability changes. For another example, if the capability information storage device receives the sensing device subscription message, the capability information storage device may send, to the SF, capability information collected within a period of time after the sensing device subscription message is received.

In addition, in a scenario in which there is an interface between the SF and an access network device, the SF may obtain the capability information of the 3GPP device through the interface between the SF and the access network device. The 3GPP device may be the access network device, or may be a terminal device connected to the access network device.

For example, the capability information storage device is the AMF. As the 3GPP device, the terminal device and/or the access network device may provide the capability information for the AMF in a process of registering with the AMF. In an example in which the SF obtains the capability information from the AMF, the SF may send the sensing device request message to the AMF. In this case, the AMF may provide the SF with the capability information obtained from the terminal device and/or the access network device. In another example in which the SF obtains the capability information from the AMF, the SF may send the subscription message to the AMF. After accepting subscription, the AMF may provide the SF with capability information of a 3GPP device that newly goes online or whose sensing capability changes.

Optionally, the sensing device request message and/or the sensing device subscription message may carry N3GPP sensing requirement information (for ease of distinguishing a plurality of pieces of sensing requirement information in this application, the sensing requirement information herein may be referred to as third sensing requirement information), indicating that the device supporting an N3GPP sensing capability is discovered. Correspondingly, the 3GPP device and/or the capability information storage device may provide, based on the third sensing requirement information, the SF with capability information that is of a device and that satisfies a requirement. For example, the capability information provided by the 3GPP device and/or the capability information storage device for the SF is capability information that satisfies the third sensing requirement information, so that the SF can obtain the capability information that satisfies the requirement, to improve sensing reliability.

It may be understood that first sensing requirement information, second sensing requirement information, the third sensing requirement information, and fourth sensing requirement information in this application may be the same or different.

The third sensing requirement information may be determined based on the fourth sensing requirement information. For example, the third sensing requirement information may be the same as the fourth sensing requirement information, or may be obtained based on the fourth sensing requirement information. Optionally, the fourth sensing requirement information may be included in a sensing request message shown in S 102. That is, the fourth sensing requirement information may represent a sensing requirement of a requesting device. Alternatively, the third sensing requirement information may be independent of the fourth sensing requirement information, for example, is generated by the SF based on a decision and/or configuration information thereof. This is not specifically limited.

The third sensing requirement information is used as an example. The sensing requirement information in this application may include one or more of the following information:
(1) Required sensing area, which may be referred to as a target area, and may indicate an area, a position, or a scope in which sensing needs to be performed. For example, the required sensing area may include geographic coordinate information or area information that is required to be sensed. For example, the geographic coordinate information may be longitude and latitude information. For another example, the area information is information about or an identifier of a 3GPP area, for example, information such as a cell identity, a TRP identifier, a CU identifier, a DU identifier, an RRU identifier, an AAU identifier, an access network device identifier, or a TAI.
(2) Required sensing type, which may be referred to as a target sensing type, and may indicate a needed sensing type and/or sensing data type. For example, the required sensing type may indicate that 3GPP sensing and/or N3GPP sensing need/needs to be performed, or the required sensing type may indicate that required sensing data is the 3GPP sensing data and/or the N3GPP sensing data. In addition, 3GPP sensing and/or N3GPP sensing may also be performed by default. For example, when 3GPP sensing or N3GPP sensing is not explicitly indicated to be required, 3GPP sensing and/or N3GPP sensing may be used by default to obtain sensing data that satisfies other sensing requirement information.
   Optionally, the required sensing type may further indicate a type of N3GPP sensing that needs to be performed, for example, indicate that radar sensing needs to be performed. For example, a bitmap may indicate a type supported or not supported in a plurality of N3GPP sensing types.
(3) Required sensing capability indicator, which may be referred to as a target KPI, and may indicate needed 3GPP sensing performance and/or N3GPP sensing performance. For example, the required sensing capability indicator may indicate required sensing accuracy.
(4) Fusion requirement information, indicating whether the N3GPP sensing data and the 3GPP sensing data need to be fused, and/or indicating a required fusion indicator of N3GPP sensing data and 3GPP sensing data.

The data fusion indicator may indicate levels at which data fusion needs to be performed.

In addition, the data fusion indicator may further indicate types, where data of the types needs to be fused. For example, when only the point cloud data captured by the camera and the 3GPP sensing data need to be fused, the data fusion indicator may indicate that only the sensing data captured by the camera needs to be fused.

(5) Sensing service information, which is also referred to as required sensing service information, where the sensing service information indicates or is for determining a sensing service requested by the requesting device. The sensing service may correspond to, indicate, or be for determining one or more of the required sensing area, the required sensing capability indicator, the fusion requirement information, and the required sensing type. For example, there is an association relationship between the sensing service and one or more of the required sensing area, the required sensing type, the required sensing capability indicator, the fusion requirement information, and the required sensing type. Therefore, the sensing service information may be for representing one or more of the required sensing area, the required sensing type, the required sensing capability indicator, the fusion requirement information, and the required sensing type. The association relationship may be predefined, may be indicated by the network element like the SF or the server, or may be indicated by a sensing requesting device like the terminal device, the access network device, or the server. This is not specifically required in this application. Optionally, the sensing service information may include an identifier of the sensing service, information about the requesting device, type information of the sensing service, or the like.

(6) Device identifier, which may indicate a device that needs to perform sensing. Referring to the descriptions of the device identifier in the capability information, the device identifier herein may include the identifier of the 3GPP device and/or the identifier of the N3GPP device, which respectively indicate/indicates the 3GPP device and/or the N3GPP device that perform/performs N3GPP sensing.

It may be understood that one or more of the required device identifier, the required sensing area, the fusion requirement information, and the required sensing service information may alternatively be independent of the sensing requirement information, that is, serve as a sensing requirement parallel to the sensing requirement information.

In addition, optionally, if the sensing device request message and/or the sensing device subscription message do/does not carry the third sensing requirement information, in this application, any device supporting an N3GPP sensing capability may be required by default to provide a N3GPP sensing service. In addition, default sensing requirement information may also be used. The default sensing requirement information may be predefined, for example, defined in a protocol or defined in a factory-delivered configuration of a device. The default sensing requirement information may also be preconfigured. For example, the default sensing requirement information may be obtained by a device based on configuration information sent by the network element like the SF or the server, or may be obtained in a previous sensing procedure or configuration process.

S102: The SF receives the sensing request message from the requesting device, where the sensing request message is for requesting to obtain sensing data.

In other words, the sensing request message may be for requesting a sensing result.

The requesting device may be a device like a terminal device, an access network device, an AF, or an AS that is configured to request the sensing service. In this case, the requesting device may send the sensing request message based on a sensing-related service. In addition, it is not excluded that sensing is performed based on a network optimization requirement. In this case, the requesting device may be a core network element like an SMF. It may be understood that the SF may send the sensing data or the sensing result to the requesting device based on the sensing request message.

Optionally, the sensing request message may include the sensing requirement information (for ease of distinguishing, the sensing requirement information may be referred to as the fourth sensing requirement information). The fourth sensing requirement information may include one or more of a required sensing area, a required sensing capability indicator, fusion requirement information, a required sensing type, and sensing service information.

S103: The SF determines a first device based on the capability information of the device supporting an N3GPP sensing capability in response to the sensing request message.

The first device may be a 3GPP device. For example, in S103, the SF may select, based on the capability information of the 3GPP device, a 3GPP device that satisfies a requirement as the first device. In addition, the SF may also select, based on the capability information of the N3GPP device, an N3GPP device that satisfies a requirement, and use, as the first device, a 3GPP device connected to the N3GPP device.

In a possible embodiment, the SF may determine the first device based on the first sensing requirement information and the capability information, and therefore may appropriately determine the first device, to obtain sensing data that satisfies the requirement. The first sensing requirement information may include one or more of a required sensing area, a required sensing capability indicator, fusion requirement information, a required sensing type, and sensing service information. For descriptions of each piece of information thereof, refer to the descriptions of the third sensing requirement information.

The first sensing requirement information may be the same as or different from the fourth sensing requirement information. If the first sensing requirement information is the same as the fourth sensing requirement information, the SF may select the first device based on the sensing requirement. If the first sensing requirement information is different from the fourth sensing requirement information, the SF may perform specific processing on the fourth sensing requirement information provided by the requesting device, and select the first device based on the first sensing requirement information obtained through processing. Optionally, the first sensing requirement information may be the same as or different from the third sensing requirement information. This is not specifically limited in this application.

In an example, processing of the fourth sensing requirement information by the SF may include: determining, based on the fourth sensing requirement information, whether N3GPP sensing needs to be performed, and determining, based on a result, whether to indicate requirement information such as the N3GPP sensing type in the first sensing requirement information, for example, determining, based on a required sensing performance indicator, whether sensing performance needs to be improved through N3GPP sensing. Optionally, if the SF determines that N3GPP sensing needs to be performed, and the fourth sensing requirement information does not explicitly indicate that N3GPP sensing needs to be performed, the first sensing requirement information may indicate that N3GPP sensing needs to be performed. That is, the first sensing requirement information may carry required sensing type information indicating that N3GPP sensing needs to be performed. Likewise, when determining, based on the fourth sensing requirement information, to perform N3GPP sensing, the SF may also determine a required N3GPP sensing performance indicator, and use the first sensing requirement information to carry the N3GPP sensing performance indicator.

Optionally, in S103, a manner in which the SF determines the first device based on the first sensing requirement information and the capability information of the device supporting an N3GPP sensing capability may include any one or more of the following:
A: The SF selects the first device based on the required sensing area included in the first sensing requirement information and the supported sensing area indicated by the capability information of the device supporting an N3GPP sensing capability. For example, the SF may select, as the first device, a device supporting an N3GPP sensing capability whose supported sensing area belongs to a scope of the required sensing area.
B: The SF selects the first device based on the required N3GPP sensing data type included in the first sensing requirement information and the supported N3GPP sensing type indicated by the capability information of the device supporting an N3GPP sensing capability, so that the first device supports N3GPP sensing of the required type.
C: The SF selects the first device based on the fusion requirement information that is included in the first sensing requirement information and that indicates whether data fusion needs to be performed and the capability information that indicates whether data fusion is supported and that is indicated by the capability information of the device supporting an N3GPP sensing capability. If the first sensing requirement information indicates that data fusion needs to be performed, and the device supporting an N3GPP sensing capability supports data fusion, the device may be used as the first device.
D: The SF selects the first device based on the required data fusion indicator included in the first sensing requirement information and the supported data fusion indicator indicated by the capability information of the device supporting an N3GPP sensing capability. For example, if the required fusion indicator requires data fusion at the point cloud data layer, the selected first device supports at least data fusion at the point cloud data layer.
E: The SF selects the first device based on the sensing service information included in the first sensing requirement information and the capability information of the device supporting an N3GPP sensing capability. For example, a device whose supported sensing service information includes the sensing service information included in the first sensing requirement information is selected as the first device. For another example, the SF may determine, based on the sensing service information, the area in which sensing needs to be performed, the required sensing type, the required sensing capability indicator, and the required data fusion indicator, to match the capability information of the device supporting an N3GPP sensing capability, and select a device that matches the foregoing parameters as the first device. When a plurality of parameters need to be matched, a device that matches all of the plurality of parameters, at least one parameter, or at least a specific parameter (for example, sensing area information) may be selected as the first device.

It may be understood that the required sensing area, the required N3GPP sensing data type, the fusion requirement information indicating whether data fusion needs to be performed, and the required data fusion indicator that are included in the first sensing requirement information may alternatively be respectively replaced with the required sensing area, the required N3GPP sensing data type, the fusion requirement information indicating whether data fusion needs to be performed, and the required data fusion indicator that are indicated by the sensing service information in the first sensing requirement information. Alternatively, the SF may determine, based on the sensing service information included in the first sensing requirement information, one or more pieces of sensing requirement information: the required sensing area, the required sensing type, the required sensing capability indicator, the fusion requirement information, and the required sensing type, and select, based on the sensing requirement information and the capability information of the device supporting an N3GPP sensing capability, a device supporting the one or more pieces of sensing requirement information as the first device. When a plurality of parameters need to be matched, a device that matches all of the plurality of parameters, at least one parameter, or at least a specific parameter (for example, sensing area information) may be selected as the first device.

S104: The SF sends a first message to the first device, where the first message may be for requesting the N3GPP sensing data.

Optionally, the first message may include the second sensing requirement information.

The second sensing requirement information may include one or more of a required sensing area, a required sensing capability indicator, fusion requirement information, a required sensing type, and sensing service information. For descriptions of each piece of information thereof, refer to the descriptions of the third sensing requirement information.

It may be understood that the second sensing requirement information may be the same as any one or more of the first sensing requirement information, the third sensing requirement information, and the fourth sensing requirement information, or may be different from all of the first sensing requirement information, the third sensing requirement information, and the fourth sensing requirement information.

For example, the required sensing area included in the second sensing requirement information may be a sensing area associated with the first device (generally equal to or slightly greater than a sensing area supported by the first device), and is for requesting the first device to perform sensing in the area. The sensing area included in the first sensing requirement information may not be associated with a specific device supporting an N3GPP sensing capability, for example, may represent an area corresponding to a required sensing scope. In addition, the sensing area included in the second sensing requirement information may be determined based on the sensing area included in the first sensing requirement information. For example, the sensing area included in the second sensing requirement information may be a sensing area that has a smaller scope and that is determined, based on the sensing area supported by the first device, in the sensing area included in the first sensing requirement information.

For another example, the second sensing requirement information may further include information about a selected N3GPP device, for example, include an identifier of the N3GPP device, to indicate that the corresponding N3GPP device performs N3GPP sensing, or identify that sensing data of the corresponding N3GPP device is needed. The identifier of the N3GPP device may not be included in the first sensing requirement information and/or the fourth sensing requirement information, but is determined by the SF for the N3GPP device connected to the first device and an N3GPP sensing requirement after the SF selects the first device. Therefore, when the SF explicitly requires, by using the second sensing requirement information, the N3GPP device to perform N3GPP sensing, the first device may request, indicate, or control the N3GPP device to perform N3GPP sensing.

In addition, when the SF does not explicitly require, by using the second sensing requirement information, the N3GPP device to perform N3GPP sensing, the first device may also determine, based on the second sensing requirement information, whether the N3GPP device needs to perform N3GPP sensing. For example, when the required sensing area indicated by the second sensing requirement information is the sensing scope of the N3GPP device, and/or the required sensing capability indicator indicated by the second sensing requirement information can be implemented only when the N3GPP device provides a N3GPP sensing service, the first device may determine that the N3GPP device performs N3GPP sensing. For another example, when the first device does not support N3GPP sensing, and the second sensing requirement information indicates that N3GPP sensing needs to be performed, the first device may determine that the N3GPP device performs N3GPP sensing. When the N3GPP device performs N3GPP sensing, the first device may perform 3GPP sensing and/or N3GPP sensing, or may not perform sensing.

In some cases, the first device may alternatively determine that the first device performs 3GPP sensing and/or N3GPP sensing, and the N3GPP device does not need to provide the N3GPP sensing data. For example, when a sensing capability of the first device can satisfy a sensing capability required in the second sensing requirement information, the first device may perform 3GPP sensing and/or N3GPP sensing.

It may be understood that, if the first message includes the information about the selected N3GPP device, or the first device determines, based on the second sensing requirement information, that the N3GPP device needs to perform N3GPP sensing, the first device may request, indicate, or control, based on the first message, the N3GPP device to perform N3GPP sensing, and obtain the N3GPP sensing data from the N3GPP device through a connection between the first device and the N3GPP device.

Optionally, the first message may further carry an address and/or a label that are/is used by the SF to receive the N3GPP sensing data. Further, optionally, the address and/or the label may be carried in the first message. That is, when the SF requests the N3GPP sensing data from the first device, the address and/or the label that are/is for receiving the N3GPP sensing data is carried. In addition, when the SF sends the device request message and/or the device subscription message to the first device, the address and/or the label that are/is for receiving N3GPP sensing data may be carried.

The address may include a device address and a port of the SF. The device address may be specifically a user plane tunneling protocol IP address. The label may be an identifier that is allocated by the SF or that represents N3GPP sensing data by default. Correspondingly, when receiving sensing data whose destination address is the address, the SF may identify that the sensing data is the N3GPP sensing data. Alternatively, when receiving sensing data that carries the label or that is sent together with the label, the SF may identify that the sensing data is the N3GPP sensing data.

S105: The SF receives first sensing data from the first device, where the first sensing data includes the N3GPP sensing data.

Based on S105, the SF may obtain the first sensing data.

The N3GPP sensing data may be obtained, through N3GPP sensing measurement, by the first device or the N3GPP device connected to the first device. If the N3GPP device obtains the N3GPP sensing data, the first device may obtain the N3GPP sensing data from the N3GPP device, and then the first device may send the first sensing data to the SF, that is, report the N3GPP sensing data to the SF.

Optionally, the SF may further process the first sensing data, to obtain second sensing data. The second sensing data may be sensing data obtained based on processing such as cluster analysis performed on the first sensing data, and the sensing data may be for further determining the sensing result. In addition, the second sensing data may also include the sensing result.

In an example, the first device may include a plurality of 3GPP devices. In this case, processing performed by SF may include fusion of sensing data from the plurality of 3GPP devices, and the second sensing data obtained through fusion may include N3GPP sensing data of the plurality of 3GPP devices.

In another example, the SF may further receive 3GPP sensing data from a second device. The second device may include one or more first devices supporting 3GPP sensing. Alternatively, the second device may be a device, for example, a terminal device and/or an access network device, supporting 3GPP sensing other than the first device. In this case, processing of the first sensing data by the SF may include: The SF fuses the N3GPP sensing data and the 3GPP sensing data, to obtain the second sensing data. Therefore, performance such as sensing accuracy may be improved by combining 3GPP sensing and N3GPP sensing.

If the second device includes one or more first devices, that is, the second device includes one or more 3GPP devices configured to provide the N3GPP sensing data for the SF, the first message sent by the SF to these first devices may be further used by the first devices to obtain the 3GPP sensing data. For example, the first message may carry sensing type indication information of 3GPP sensing, to indicate the first devices to perform 3GPP sensing. Alternatively, the first devices may determine, based on the sensing requirement information in the first message, whether to perform 3GPP sensing. For example, when the first devices cannot satisfy, by performing only N3GPP sensing, the sensing area, the sensing capability indicator, or the fusion requirement information required in the sensing requirement information, the first devices may determine to perform 3GPP sensing.

In addition, in a solution of a combination of the foregoing two examples, the SF may also fuse sensing data from a plurality of 3GPP devices. At least one of the plurality of 3GPP devices or a corresponding N3GPP device supports N3GPP sensing, and at least one 3GPP device supports 3GPP sensing. Therefore, fusion of sensing data includes fusion of the sensing data from the plurality of 3GPP devices and fusion of the N3GPP sensing data and the 3GPP sensing data.

Optionally, the SF may send the second sensing data to the requesting device, so that the requesting device performs analysis and/or processing based on the second sensing data, to obtain the final sensing result. In addition, the second sensing data may alternatively be understood as the final sensing result, or understood as sensing data for determining the sensing result. Correspondingly, the SF may send the sensing result to the requesting device.

It may be understood that the SF may perform sensing data fusion based on the sensing requirement information (for example, the fourth sensing requirement information or the first sensing requirement information), for example, process the first sensing data and the 3GPP sensing data based on the fourth sensing requirement information, to obtain the second sensing data. The fusion herein may be fusion of the sensing data from the plurality of 3GPP devices, or may be fusion of the 3GPP sensing data and the N3GPP sensing data. For example, the sensing data or the sensing result obtained through fusion is enabled to satisfy one or more requirements in the required sensing area, the required sensing capability indicator, the fusion requirement information, and the sensing type in the sensing requirement information. Therefore, the SF may obtain, through sensing data fusion, the sensing data or the sensing result that satisfies the requirement of the requesting device, so that sensing accuracy can be improved.

Optionally, the first sensing data in S105 may be sensing data generated based on the N3GPP sensing data and the 3GPP sensing data. For example, the first sensing data is sensing data obtained through fusion of N3GPP sensing and 3GPP sensing. The first device supporting data fusion may fuse the N3GPP sensing data and the 3GPP sensing data, to generate the sensing data. Therefore, in this application, the first device may fuse the N3GPP sensing data and the 3GPP sensing data; the SF may fuse the N3GPP sensing data and the 3GPP sensing data; or the first device may fuse the N3GPP sensing data and the 3GPP sensing data that can be obtained by the first device, and the SF fuses data obtained through fusion and provided by one or more first devices, the N3GPP sensing data, and the 3GPP sensing data.

For example, when the first message carries the sensing requirement information, the first device may perform sensing data fusion based on the sensing requirement information. Specifically, when the sensing requirement information includes the fusion requirement information indicating that data fusion needs to be performed, and/or when the sensing requirement information includes the fusion indicator, the first device may fuse the N3GPP sensing data and the 3GPP sensing data, to obtain the first sensing data. The first device may perform data fusion based on the fusion indicator carried in the sensing requirement information or a default fusion indicator. The default fusion indicator can be predefined or preconfigured. In addition, when obtaining the N3GPP sensing data and the 3GPP sensing data, the first device may also, by default, perform data fusion, and provide the SF with the first sensing data obtained through fusion. In this case, data fusion may be performed based on the default fusion indicator.

In addition, if the sensing requirement information carried in the first message does not include the fusion requirement information, that is, does not explicitly indicate, request, or require the first device to perform fusion of N3GPP sensing data and 3GPP sensing data, the first device may not need to perform fusion of the N3GPP sensing data and the 3GPP sensing data by default. In this case, the SF may perform fusion of the N3GPP sensing data and the 3GPP sensing data.

When a control plane-user plane separation architecture is used for the SF, S101 to S104 may be understood as being performed by an SF-C, and S105 and the action of sending the second sensing data may be understood as being performed by an SF-U.

It may be understood that, in this application, the first device may support both the N3GPP sensing capability and fusion of the 3GPP sensing data and the N3GPP sensing data. Alternatively, the first device may support the N3GPP sensing capability but does not support fusion of the 3GPP sensing data and the N3GPP sensing data. Alternatively, the first device may not support the N3GPP sensing capability, but is connected to one or more N3GPP devices. In this case, optionally, the first device may support fusion of the 3GPP sensing data and the N3GPP sensing data, or may support only reporting, to the SF, of the N3GPP sensing data provided by the N3GPP device.

Based on the procedure shown in FIG. 5, the SF may obtain the capability information of the device supporting an N3GPP sensing capability, and select, based on the capability information, the one or more first devices supporting the N3GPP sensing capability. The SF may further send the first message to the first device, to request, control, or indicate the first device to provide the N3GPP sensing data.

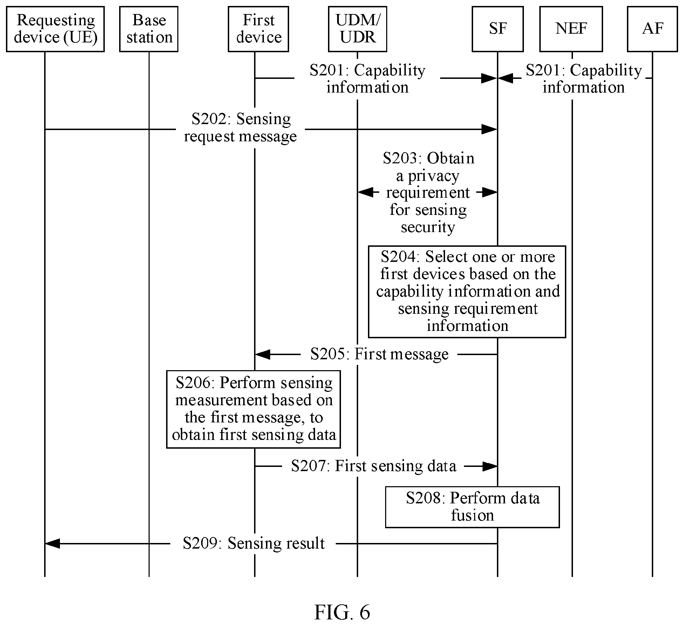

For example, the procedure shown in FIG. 5 may be applied to the following embodiments shown in FIG. 6 to FIG. 10. The following separately describes the embodiments shown in FIG. 6 to FIG. 10.

As shown in FIG. 6, **in Embodiment 1,** a sensing network element is an SF, and the SF collects and/or stores capability information of a device supporting N3GPP sensing. A manner in which the SF collects the capability information may be that the SF receives capability information reported by a 3GPP device via a network element like an AMF or an AF, or may be that the SF receives capability information from an access network device through an interface (the NS1 interface shown in FIG. 4) between the SF and the access network device.

The embodiment 1 shown in FIG. 6 may include the following steps.

S201: The 3GPP device reports the capability information to the SF.

Accordingly, the SF stores the capability information.

For example, the 3GPP device is a terminal device or an access network device.

As described in this application, when the 3GPP device supports N3GPP sensing, the 3GPP device may be the device supporting N3GPP sensing, and in this case, the capability information includes N3GPP sensing capability information of the 3GPP device; and/or an N3GPP device connected to the 3GPP device may support N3GPP sensing, and in this case, the capability information includes N3GPP sensing capability information of the N3GPP device.

In addition, the capability information may include one or more of a sensing area supported by the 3GPP device, a position of the 3GPP device, an indication indicating that the 3GPP device supports an N3GPP sensing capability, a device identifier of the 3GPP device, a sensing type supported by the 3GPP device, a sensing capability indicator supported by the 3GPP device, and sensing data fusion capability information supported by the 3GPP device and/or a sensing area supported by the N3GPP device, a position of the N3GPP device, an indication indicating that the N3GPP device supports an N3GPP sensing capability, a device identifier of the N3GPP device, a sensing type supported by the N3GPP device, a sensing capability indicator supported by the N3GPP device, and sensing data fusion capability information supported by the N3GPP device. For descriptions of the capability information, refer to the descriptions in the procedure in FIG. 5 in this application. Repeated parts are not described again.

Optionally, in S201, the 3GPP device may report the capability information to the SF via the AMF or the AF or through the interface between the access network device and the SF.

For example, the 3GPP device may report information about the N3GPP device to the SF via the AMF by using a non-access stratum (non-access stratum, NAS) protocol. In addition, the 3GPP device may also report the capability information to the SF through a user plane path, for example, by using an application layer protocol like a hypertext transfer protocol (hypertext transfer protocol, HTTP) or a session initiation protocol (session initiation protocol, SIP).

In addition, in S201, the AF may report the capability information to the SF. For example, the AF may be mounted in the terminal device. Therefore, the AF may obtain the capability information of the terminal device and/or the capability information of the N3GPP device connected to the terminal device, and the AF provides the capability information for the SF. The AF reports the capability information to the SF.

It may be understood that S201 may be used as an example implementation of S101 in the procedure shown in FIG. 5.

S202: A sensing service requesting device sends a sensing request message.

Accordingly, the SF receives the sensing request message.

The requesting device may be a device like a terminal device, an access network device, an AF, or an AS that is configured to request a sensing service. In FIG. 6, an example in which the terminal device is used as the requesting device is used.

If the AS or the terminal device is used as the requesting device, a NEF and/or an AF may receive the sensing request message from the requesting device, and forward the sensing request message to the SF. In an example, the NEF is used as a forwarding node, and/or the AF is used as a forwarding node, to forward (for example, transparently transmit) the sensing request message sent by the AS. In another example, the AF may be mounted in the terminal device. After the AF obtains the sensing request message from the terminal device, the AF may send the sensing request message to the SF, or the AF may send the sensing request message to the SF via the NEF.

In addition, if the terminal device or the access network device is used as the requesting device, the requesting device may send the sensing request message to the SF via the AMF, or may send the sensing request message through the interface between the access network device and the SF.

In S202, the sensing request message may include fourth sensing requirement information, for example, one or more of a required sensing area, a required sensing capability indicator, fusion requirement information, a required sensing type, and sensing service information. For the foregoing sensing requirement information, refer to the descriptions of the sensing requirement information in S101. The sensing requirement information may be indicated by using the sensing service information. For example, the sensing service information may alternatively be independent of the sensing requirement information, and there may be a correspondence or an association relationship between the sensing service information and the sensing requirement information. Therefore, the sensing requirement information may alternatively be implicitly indicated by indicating the sensing service information.

S203: Optionally, the SF obtains a privacy requirement for sensing security from a UDM/UDR.

For example, the privacy requirement indicates or represents that the device supporting N3GPP sensing and a sensed object are based on a privacy security regulation. That is, the SF ensures, through S203, that sensing cannot be performed privately, to avoid leakage of sensitive information.

S204: The SF selects, based on the capability information of the device supporting N3GPP sensing and sensing requirement information, one or more first devices for performing N3GPP sensing. The sensing requirement information is, for example, the foregoing first sensing requirement information.

Refer to the descriptions of S103. The SF may select the one or more first devices from at least one device based on the first sensing requirement information and capability information of the at least one device, and the first device or an N3GPP device connected to the first device performs N3GPP sensing.

In addition, optionally, the SF may select one or more N3GPP devices connected to the first device, and indicate information about the N3GPP device, so that the first device requests, indicates, or controls the N3GPP device to perform N3GPP sensing.

It may be understood that S204 may be used as an example implementation of S103 in the procedure shown in FIG. 5.

S205: The SF sends a first message to the first device.

The first message may be a sensing control message, and is for triggering the first device to provide first sensing data for the SF, that is, provide N3GPP sensing data.

The first message may include second sensing requirement information, and may indicate at least an N3GPP sensing requirement.

In addition, the SF may further determine whether the first device needs to fuse 3GPP sensing data and the N3GPP sensing data. If the first device needs to perform data fusion, the SF may further determine fusion requirement information. The fusion requirement information may be understood as fusion requirement information included in the second sensing requirement information. As described in this application, the second sensing requirement information may be sensing requirement information sent by the SF to the first device. The second sensing requirement information may be different from the first sensing requirement information. For example, the second sensing requirement information may be obtained based on the first sensing requirement information, and the first sensing requirement information and/or the second sensing requirement information may be obtained based on the fourth sensing requirement information.

The first message or the second sensing requirement information may further include an identifier of the N3GPP device, to indicate that the N3GPP device performs N3GPP sensing.

Optionally, the first message may further include an address and/or an identifier that are/is used by the SF to receive the first sensing data. Correspondingly, when sending the first sensing data to the SF, the first device may send the data by using the address, or send the identifier when sending the data, so that the SF identifies the first sensing data based on the address and/or the identifier.

S206: The first device performs sensing measurement based on the first message, to obtain the first sensing data, where the first sensing data includes the N3GPP sensing data.

When the first device supports N3GPP sensing, a sensing device may perform N3GPP sensing, and obtain the N3GPP sensing data.

In addition, when the first device does not support N3GPP sensing, but is connected to the N3GPP device, the sensing device may obtain the N3GPP sensing data from the N3GPP device.

If the first device supports N3GPP sensing, and is further connected to the one or more N3GPP devices, the N3GPP sensing data may include N3GPP sensing data obtained by performing N3GPP sensing by the first device, and may further include N3GPP sensing data obtained by performing N3GPP sensing by the N3GPP device. Optionally, the first device may fuse the N3GPP sensing data obtained by performing N3GPP sensing and the N3GPP sensing data obtained by performing N3GPP sensing by the N3GPP device, to obtain the first sensing data.

Optionally, the first sensing data may be data obtained by the first device by fusing the 3GPP sensing data and the N3GPP sensing data. The 3GPP sensing data may be obtained by the first device through 3GPP sensing. The N3GPP sensing data may be obtained by the first device through N3GPP sensing, and/or may be obtained by the N3GPP device through N3GPP sensing.

In a possible implementation, if the sensing requirement information in the first message includes the data fusion requirement information, the first device may need to fuse the 3GPP sensing data and the N3GPP sensing data by default. Therefore, if the first device obtains both the 3GPP sensing data and the N3GPP sensing data, data fusion needs to be performed. In addition, if the sensing requirement information in the first message does not include the data fusion requirement information, the first device may not need to perform data fusion by default. Therefore, if the first device obtains both the 3GPP sensing data and the N3GPP sensing data, the first device may send the 3GPP sensing data and the N3GPP sensing data to the SF, and does not need to perform data fusion.

S207: The first device sends the first sensing data to the SF.

Optionally, if the first message includes the address for receiving the first sensing data in S205, the first device may use the address as a destination address of the first sensing data in S207. Correspondingly, the SF may identify that sensing data received by using the address includes the N3GPP sensing data, namely, the first sensing data.

For example, the SF may send a channel setup request to the first device via the AMF, to request to set up a channel, where the channel may be for transmission of the first sensing data. The channel setup request may include the address for receiving the first sensing data. Correspondingly, transmission of the first sensing data may be performed through the channel that is set up. Correspondingly, the SF may learn that data transmitted through the channel is the first sensing data.

In addition, if the first message includes the identifier for receiving the first sensing data in S205, the first device may send the first sensing data and the identifier in S207. Correspondingly, the SF may identify that sensing data sent together with the identifier includes the N3GPP sensing data, namely, the first sensing data.

Optionally, the first sensing data may further include the 3GPP sensing data.

S208: Optionally, the SF performs data fusion.

The data fusion in S208 includes fusion performed by the SF on sensing data respectively provided by a plurality of devices (for example, including the first device and another device), and/or includes fusion performed by the SF on the 3GPP sensing data and the N3GPP sensing data (for example, including the first sensing data).

It may be understood that in S208, data fusion may be performed based on the fusion requirement information required in the fourth sensing requirement information, so that a fusion result satisfies a requirement of the requesting device.

S209: The SF sends a sensing result to the requesting device.

The sensing result may be obtained by the SF by processing, based on the fourth sensing requirement information, sensing data including the first sensing data. For example, in addition to obtaining the first sensing data from the first device, the SF may further obtain 3GPP sensing data and/or N3GPP sensing data from another sensing device, and obtain the sensing result by performing processing such as cluster analysis on all sensing data.

Based on the procedure shown in FIG. 6, the SF may collect and/or store the capability information of the device supporting N3GPP sensing, and the SF may select the first device, and obtain, from the first device, the first sensing data including the N3GPP sensing data, to obtain the sensing result based on the first sensing data. Because the SF may collect the capability information, when selecting the first device, the SF does not need to request capability information from another device, so that efficiency of selecting an N3GPP sensing device can be improved.

In **Embodiment 2,** a sensing network element is an SF, and an N3GPP sensing capability repository function network element collects and/or stores capability information.

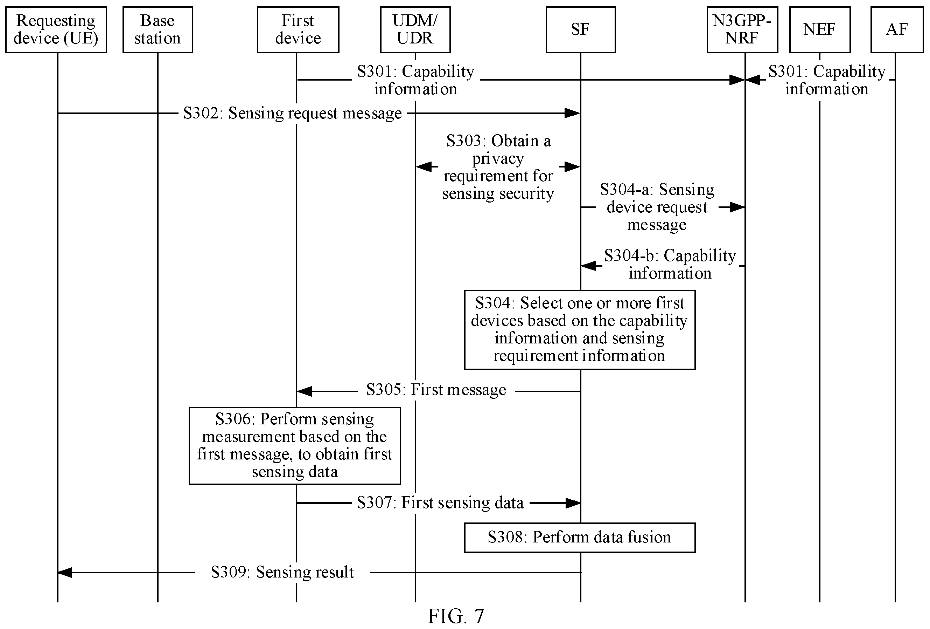

As shown in FIG. 7, a procedure of Embodiment 2 is similar to that in FIG. 6. Therefore, for implementation of step S30x in FIG. 7, refer to step S20x in FIG. 6.

A difference between FIG. 7 and FIG. 6 lies in that a 3GPP device in S301 reports the capability information to the N3GPP sensing capability repository function network element instead of reporting the capability information to the SF. In FIG. 7, an N3GPP-NRF is used as an example to represent the N3GPP sensing capability repository function network element. When the 3GPP device reports a sensing capability to the N3GPP sensing capability repository function network element, the 3GPP device may report the capability information to the N3GPP sensing capability repository function network element by using an application layer protocol like an HTTP or a SIP through a user plane path. Alternatively, the 3GPP device may send the capability information to the SF, and then the SF sends the capability information to the N3GPP sensing capability repository function network element. Alternatively, the 3GPP device may send the capability information to an AMF, and then the AMF sends the capability information to the N3GPP sensing capability repository function network element.

In addition, in the procedure in FIG. 7, before S304, S304-a and S304-b may be further performed.

In S304-a, the SF sends a sensing device request message to the N3GPP sensing capability repository function network element. Optionally, the sensing device request message may include third sensing requirement information, to discover a device supporting an N3GPP sensing capability. Therefore, the N3GPP sensing capability repository function network element may filter out, based on the third sensing requirement information, capability information of a device that satisfies a condition, and feed back the capability information of the device that satisfies the condition to the SF. The N3GPP sensing capability repository function network element may alternatively provide capability information of all devices after receiving the sensing device request message.

In S304-b, the SF may receive the capability information of the device supporting N3GPP sensing from the N3GPP sensing capability repository function network element. Optionally, the N3GPP sensing capability repository function network element may determine, based on the third sensing requirement information, capability information that satisfies a sensing requirement, and provide the SF with the capability information that satisfies the sensing requirement. For example, the N3GPP sensing capability repository function network element may select capability information of a device whose position matches a required sensing area in the third sensing requirement information, whose supported N3GPP sensing type matches a required N3GPP sensing type in the third sensing requirement information in the request, and/or whose supported sensing data fusion capability matches a required data fusion capability in the third sensing requirement information.

In a possible example, the N3GPP sensing capability repository function network element includes only capability information of an N3GPP device. In another possible example, the N3GPP sensing capability repository function network element includes only the capability information of the 3GPP device and capability information of an N3GPP device.

Based on the procedure shown in FIG. 7, the N3GPP sensing capability repository function network element may collect and/or store the capability information of the device supporting N3GPP sensing, and the N3GPP sensing capability repository function network element may provide the capability information for the SF based on the sensing device request message. In addition, in S304, the SF may further perform secondary selection based on the capability information and the sensing requirement information, to determine a first device more appropriately, and obtain, from the first device, first sensing data that includes N3GPP sensing data, to obtain a sensing result based on the first sensing data. In this embodiment, the N3GPP sensing capability repository function network element may be an independent function network element, so that occupation of processing overheads and communication overheads of the SF or another network element can be avoided.

In **Embodiment 3,** a sensing network element is an SF, and a UDR/UDM collects and/or stores capability information.

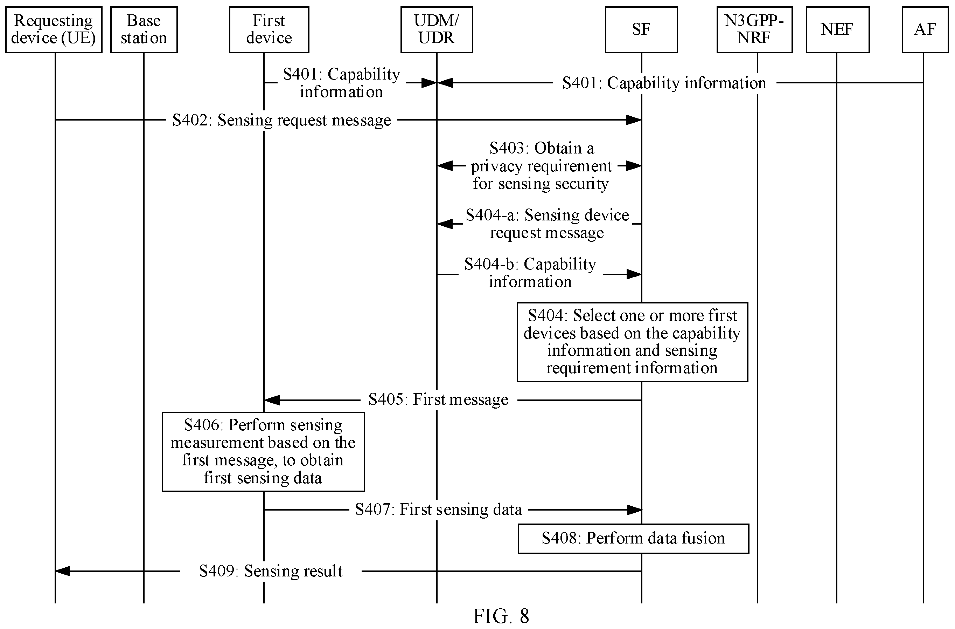

As shown in FIG. 8, a procedure of Embodiment 3 is similar to that in FIG. 7. Therefore, for implementation of step S40x in FIG. 8, refer to step S30x in FIG. 7. A difference lies in that, in the procedure in FIG. 8, the UDR/UDM performs the actions of the N3GPP sensing capability repository function network element in the procedure shown in FIG. 7.

Based on the procedure shown in FIG. 8, the UDR/UDM may collect and/or store capability information of a device supporting N3GPP sensing, and the UDR/UDM may provide the capability information for the SF based on a sensing device request message. In addition, in S404, the SF may further perform secondary selection based on the capability information and sensing requirement information, to determine a first device more appropriately, and obtain, from the first device, first sensing data that includes N3GPP sensing data, to obtain a sensing result based on the first sensing data. In this embodiment, the UDR/UDM collects and/or stores the capability information of the device supporting N3GPP sensing, so that occupation of processing overheads and communication overheads of a network element like the SF or an AMF can be avoided.

In **Embodiment 4,** a sensing network element is an SF, and an AMF collects and/or stores capability information reported by a 3GPP device.

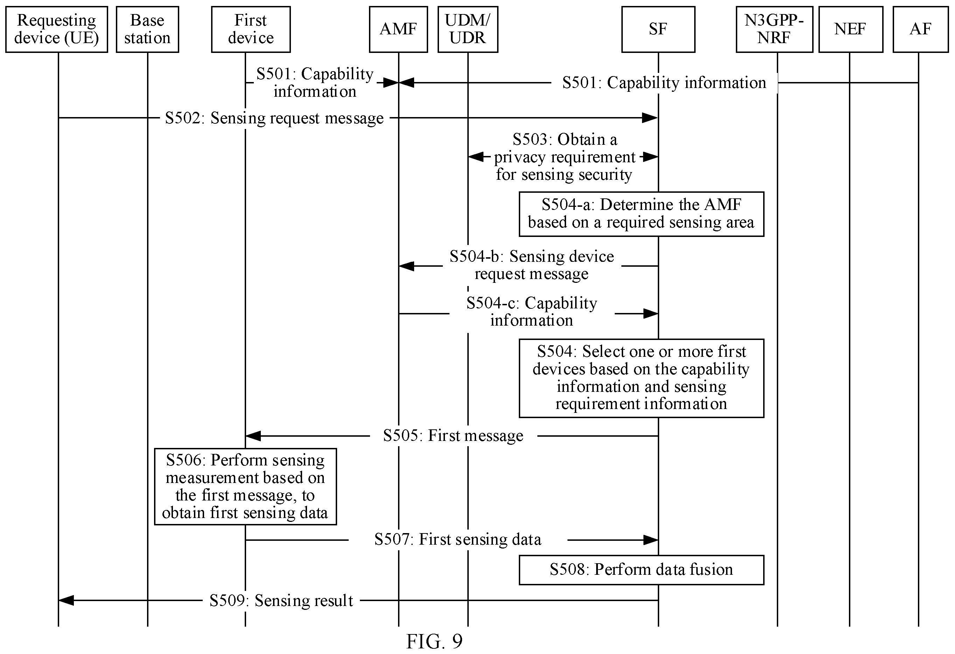

As shown in FIG. 9, a procedure of Embodiment 4 is similar to that in FIG. 6. Therefore, for implementation of step S50x in FIG. 9, refer to step S20x in FIG. 6. A difference lies in that, in S501, the 3GPP device reports the capability information to the AMF. Therefore, the capability information stored in the AMF is capability information of a 3GPP device within a scope of an area managed by the AMF.

In addition, optionally, in the procedure shown in FIG. 9, before S504, S504-a to S504-c may be further performed: The SF determines the AMF based on a required sensing area. Therefore, the SF may request the capability information of the 3GPP device from the AMF based only on the required sensing area, to avoid requesting the capability information from an AMF corresponding to an area in which sensing does not need to be performed, so that processing and communication overheads of the AMF in the non-required area can be reduced.

In addition, for S504-b and S504-c, respectively refer to the descriptions of S304-a and S304-b in FIG. 7. A difference lies in that the N3GPP sensing capability repository function network element in S304-a and S304-b is replaced with the AMF.

Based on the procedure shown in FIG. 9, the AMF may collect and/or store the capability information of the device supporting N3GPP sensing in an area managed by the AMF, and the AMF may provide, based on a sensing device request message, the SF with the capability information of the device in the area managed by the AMF. In addition, in S504, the SF may further perform secondary selection based on the capability information and sensing requirement information, to determine a first device more appropriately, and obtain, from the first device, first sensing data that includes N3GPP sensing data, to obtain a sensing result based on the first sensing data. In this embodiment, the 3GPP device like a terminal device or an access network device may register the capability information with the AMF corresponding to the area in which the 3GPP device is located, and the AMF may use the capability information as registration information of the 3GPP device in the management area, to perform unified management, thereby improving capability information storage and management efficiency.

In **Embodiment 5,** a sensing network element subscribes to capability information from an AMF, for example, may provide sensing requirement information. If a 3GPP device that satisfies N3GPP sensing requirement information performs access, the AMF may provide the capability information for the sensing network element.

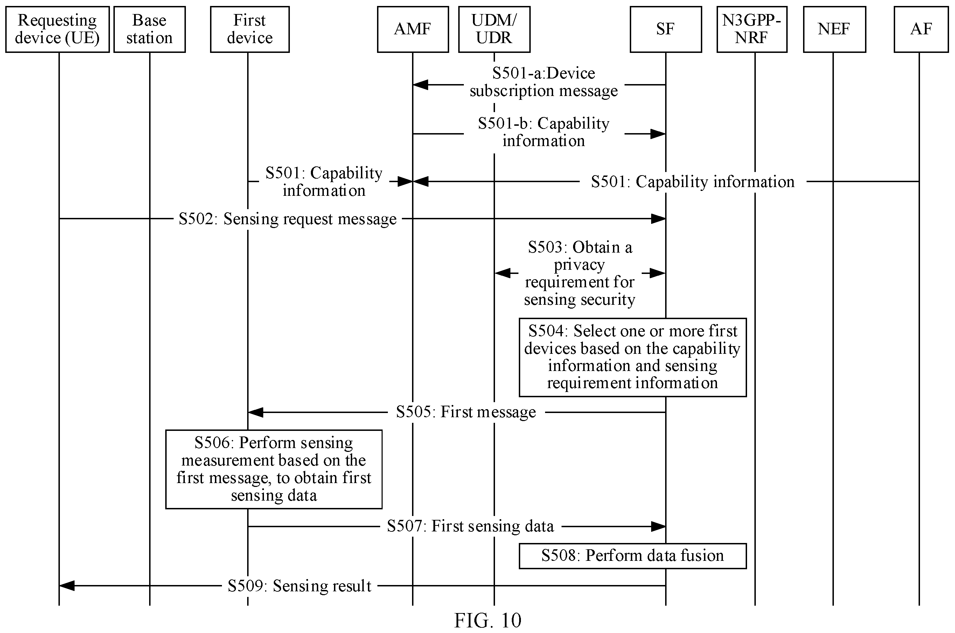

As shown in FIG. 10, a procedure of Embodiment 5 is similar to that in FIG. 9. Therefore, for implementation of step S50x in FIG. 10, refer to step S50x in FIG. 9. A difference is as follows.
(1) S504-a in FIG. 9 is deleted or canceled.
(2) S504-b in FIG. 9 is replaced with S501-a: An SF sends a device subscription message to the AMF, where the device subscription message may be for subscribing to capability information of a device supporting an N3GPP sensing capability. The AMF may send a response message to the SF, to indicate that subscription is accepted.
   Optionally, the device subscription message may include third sensing requirement information.
(3) Optionally, in specific implementation of S501 in FIG. 10, a device supporting N3GPP sensing including a first device may send a setup (setup) request through an NG interface between a base station and the AMF, and report the capability information of the device supporting N3GPP sensing to the AMF in a setup request message. Optionally, the message may be repeatedly sent when the capability information of the device supporting N3GPP sensing changes.
(4) S504-c in FIG. 9 may be replaced with S501-b. After receiving the capability information, the AMF may send the capability information to the SF.

In addition, optionally, if the device subscription message includes the third sensing requirement information, in S501-b, the AMF may provide, based on the third sensing requirement information, the SF with capability information that is of a device supporting N3GPP sensing and that satisfies a sensing requirement.

In **Embodiment 6,** an access network device provides capability information for an SF through an interface between the access network device and the SF. A 3GPP device may be an access network device, a terminal device that accesses the access network device, or another device.

The procedure of Embodiment 6 is similar to that in FIG. 6. Therefore, for implementation, refer to the steps in FIG. 6. A difference lies in that, when the step shown in S201 is performed, in Embodiment 6, a first device (or another device supporting an N3GPP sensing capability) may send the capability information to the SF through an interface between a base station and the SF, where the first device may be the base station, or may be a device like UE connected to the base station. The scenario shown in FIG. 4 is used as an example. The interface between the base station and the SF may be an NS1 interface.

In another embodiment of this application, in the procedure shown in FIG. 5, S101 may alternatively be performed by a network element storing capability information, for example, an AMF or an NRF. After performing S102, an SF may send a sensing device request message to the network element storing capability information (for details, refer to S304-a and S404-a). The network element storing capability information selects a first device. That is, S103 is alternatively performed by the network element storing capability information. The network element storing capability information sends information about the selected first device to the SF, so that the SF performs S104, S105, and an action of sending second sensing data.

In another embodiment of this application, the actions performed by the SF in the procedure shown in FIG. 5 may alternatively be performed by a sensing server. In other words, the sensing server may be configured to: obtain capability information, and select a first device based on the capability information.

For a manner in which the sensing server obtains the capability information, refer to the manner in which the SF obtains the capability information in S101. For example, refer to the manner in which the SF obtains the capability information in any possible manner in FIG. 6 to FIG. 10. For example, refer to S201 in FIG. 6. A 3GPP device may register the capability information with the sensing server. In addition, an SF may also obtain the capability information based on the manner of obtaining the capability information by the SF in S101, and the sensing server obtains the capability information from the SF.

In a possible embodiment, the action of selecting the first device by the sensing server may be performed in response to a sensing request message from a requesting device, and the sensing request message may be for requesting sensing data or a sensing result. In other words, in this embodiment, the requesting device may send the sensing request message to the sensing server, but does not send the sensing request message to the SF. In this embodiment, the sensing server may feed back second sensing data or the sensing result to the requesting device. Optionally, in this embodiment, the sensing server may further send a second message to the SF, where the second message may be for requesting the SF to perform 3GPP sensing; obtain 3GPP sensing data from the SF; and obtain the second sensing data or the sensing result by combining the 3GPP sensing data and N3GPP sensing data (for example, first sensing data).

In another possible embodiment, the action of selecting the first device by the sensing server may be performed in response to an N3GPP sensing request from the SF. The SF may receive a sensing request message from a requesting device, and send a third message to the sensing server when N3GPP sensing needs to be performed, to request N3GPP sensing and/or request N3GPP sensing data. Alternatively, the SF may determine, based on another reason, for example, based on a network optimization requirement, to enable the sensing server to perform N3GPP sensing. In this case, optionally, the SF may not perform N3GPP sensing based on the sensing request message (that is, in this case, the SF does not need to receive the sensing request message). The sensing server may further send the N3GPP sensing data (for example, first sensing data) to the SF after obtaining the N3GPP sensing data. Therefore, in this embodiment, the SF may feed back second sensing data or a sensing result to the sensing server. The second sensing data may be obtained based on at least the N3GPP sensing data. In addition, the sensing result is obtained based on at least the N3GPP sensing data. For example, the SF may request a sensing device for 3GPP sensing to obtain 3GPP sensing data, and the SF obtains the second sensing data or the sensing result by combining the 3GPP sensing data and the N3GPP sensing data.

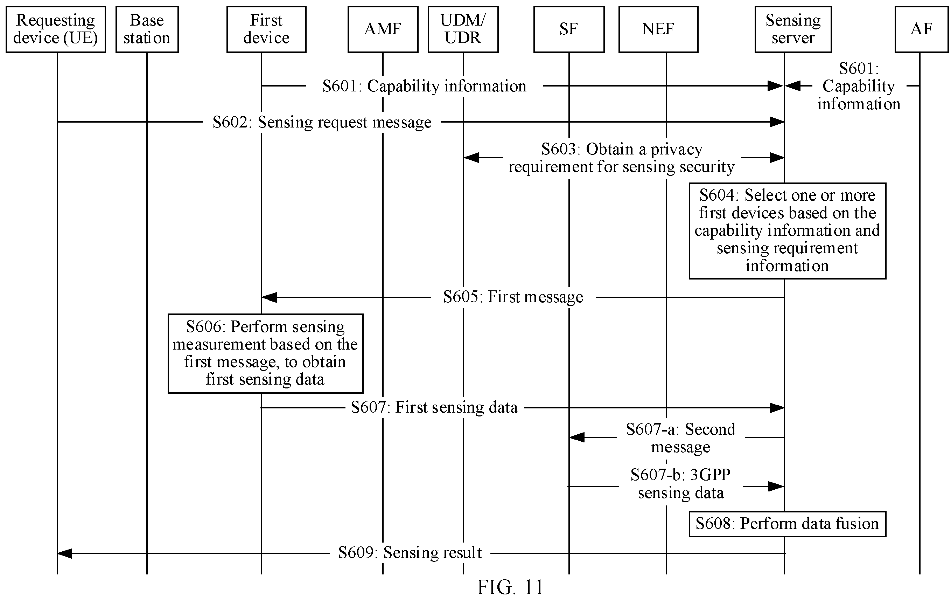

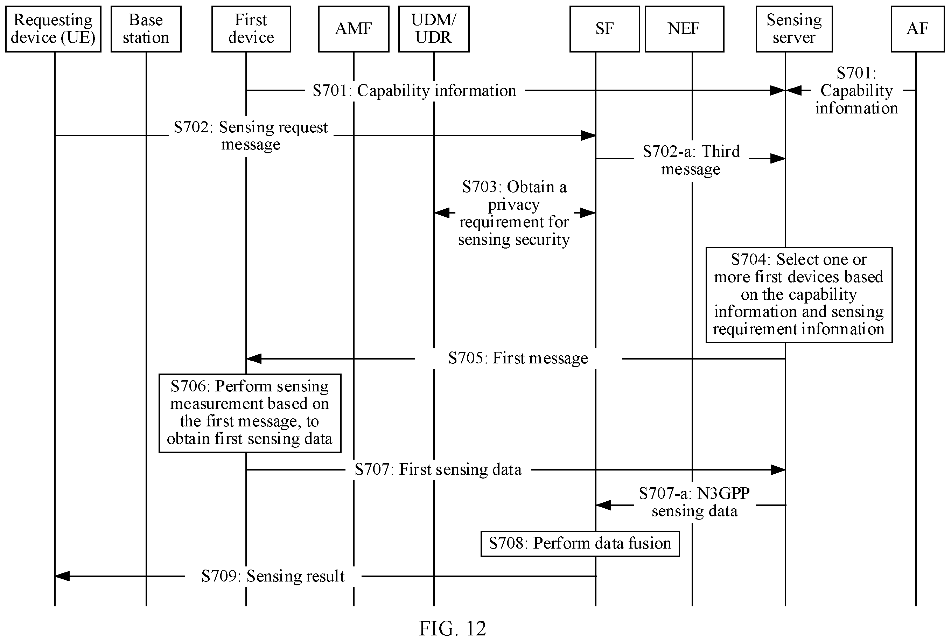

The following describes the two possible embodiments respectively with reference to embodiments shown in FIG. 11 and FIG. 12.

As shown in FIG. 11, **in Embodiment 7,** a sensing network element is a sensing server, and the sensing server collects and/or stores capability information reported by a 3GPP device. In Embodiment 7, a requesting device may send a sensing request message to the sensing server through S602, and the sensing server provides sensing data or a sensing result for the requesting device through S609. When 3GPP sensing needs to be performed, the sensing server may send a second message to an SF through S607-a, where the second message may be for requesting 3GPP sensing data. Accordingly, in S607-b, the SF may send the 3GPP sensing data to the sensing server. In addition, the server performs sensing data fusion, and obtains the sensing data or the sensing result. In Embodiment 7, the sensing server may send the sensing data or the sensing result to the requesting device through S609.

It may be understood that, in FIG. 11, for a manner in which the sensing server selects a first device through S604, refer to the manner in which the SF selects the first device in S204. For implementation of S603, refer to S203. Therefore, the sensing server may obtain a privacy requirement for sensing security from a UDM/UDR. In addition, a time sequence of performing S603 and S604 is not limited in this application. In addition, in S608, for a manner in which the sensing server performs data fusion, refer to S708. The sensing server may perform data fusion based on fourth sensing requirement information carried in the sensing request message.

As shown in FIG. 12, **in Embodiment 8,** a sensing network element is a sensing server, and the sensing server collects and/or stores capability information. After an SF receives a sensing request message from a requesting device through S702, if the SF determines, based on the sensing request message, that N3GPP sensing is needed, the SF sends a third message to the sensing server through a step shown in S702-a, so that the sensing network element selects a first device based on the capability information, and the first device performs N3GPP sensing. After obtaining N3GPP sensing data, the sensing server may provide the N3GPP sensing data for the SF through a step shown in S707-a, and then the SF provides a sensing result for the requesting device. Optionally, the SF may further obtain 3GPP sensing data based on sensing requirement information, and obtain sensing data or the sensing result by fusing the 3GPP sensing data and the N3GPP sensing data. The SF may further provide the sensing data or the sensing result for the requesting device through S709.

It may be understood that, in FIG. 12, for a manner in which the sensing server selects the first device through S704, refer to the manner in which the SF selects the first device in S204. For implementation of S703, refer to S203. In addition, a time sequence of performing S703 and S704 is not limited in this application. Optionally, the sensing server may alternatively obtain a privacy requirement for sensing security from a UDM/UDR. In S708, for a manner in which the SF performs data fusion, refer to S208.

It may be further understood that for implementations of steps that are not specifically described in FIG. 11 and FIG. 12, refer to descriptions of corresponding steps in other embodiments of this application. Details are not described again.

The actions of the 3GPP device shown in embodiments of this application may be performed by a chip on the 3GPP device, a processing module of an operating system (operating system, OS), or a middleware client (for example, exist in a form of a software development kit (software development kit, SDK)) on the OS.

Based on a same concept, embodiments of this application further provide a communication apparatus. The communication apparatus may include corresponding hardware structures and/or software modules for performing the functions shown in the foregoing methods. A person skilled in the art should be easily aware that, with reference to the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

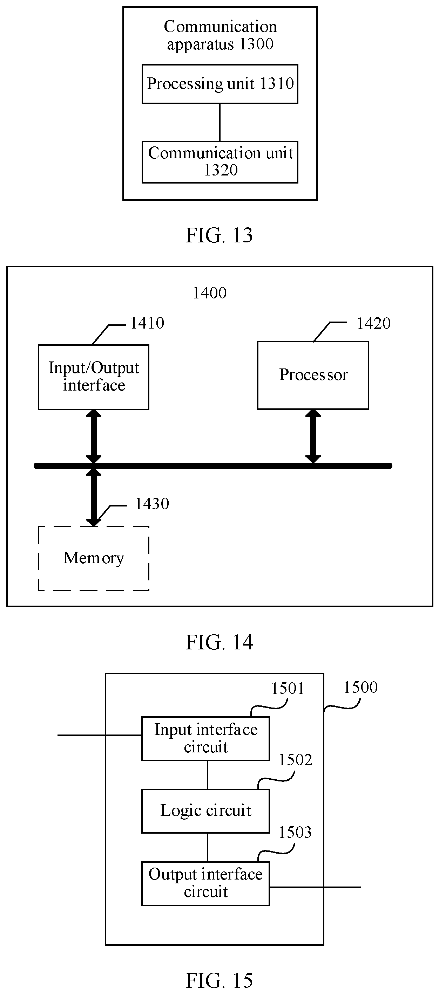

FIG. 13 to FIG. 15 are diagrams of possible structures of communication apparatuses according to embodiments of this application. The communication apparatus may be configured to implement a function of the SF, the sensing server, the device supporting N3GPP sensing, or the first device in the foregoing method embodiments. Therefore, beneficial effects of the foregoing method embodiments can also be implemented. In a possible implementation, the communication apparatus may be a component in the SF, the sensing server, the first device in the foregoing methods, or a component in a third network element. For related details and effects, refer to the descriptions in the foregoing embodiments.

As shown in FIG. 13, the communication apparatus 1300 includes a processing unit 1310 and a communication unit 1320. The communication unit 1320 may implement a corresponding communication function. The processing unit 1310 is configured to: perform data processing, for example, parse/read data or information received via the communication unit 1320, for example, policy information, trigger the communication unit 1320 to send data or information, generate to-be-sent data or information, or the like. The communication unit 1320 may alternatively be a transceiver unit, an input/output interface, or the like, and is used by the communication apparatus 1300 to perform a receiving and/or sending action. The communication apparatus 1300 may be configured to implement a function of the SF, the sensing server, the device supporting N3GPP sensing, or the first device in the method embodiment shown in any one of FIG. 5 to FIG. 12. For actions that can be performed by the communication apparatus, refer to the descriptions in the foregoing method embodiments. Details are not described herein again.

It may be understood that division into the modules in embodiments of this application is an example, is merely logical function division, and may be other division during actual implementation. In addition, functional modules in embodiments of this application may be integrated into one processor, or may exist alone physically, or two or more modules are integrated into one module. The integrated module may be implemented in a form of hardware, or may be implemented in a form of a software functional module.

FIG. 14 shows the communication apparatus 1400 according to an embodiment of this application. The communication apparatus 1400 is configured to implement the communication methods provided in this application. The communication apparatus 1400 may be a communication apparatus that applies the communication methods, may be a component in the communication apparatus, or may be an apparatus that can be used in combination with the communication apparatus. The communication apparatus 1400 may be a first network element, a second network element, or a fourth network element. The communication apparatus 1400 may be a chip system or a chip. In this embodiment of this application, the chip system may include a chip, or may include the chip and another discrete device. The communication apparatus 1400 includes at least one processor 1420, configured to implement the communication methods provided in embodiments of this application. The communication apparatus 1400 may further include an input/output interface 1410, and the input/output interface may include an input interface and/or an output interface. In this embodiment of this application, the input/output interface 1410 may be configured to communicate with another apparatus via a transmission medium, and a function of the input/output interface 1410 may include sending and/or receiving. For example, when being the chip, the communication apparatus 1400 performs transmission with another chip or device through the input/output interface 1410. The processor 1420 may be configured to implement the methods shown in the foregoing method embodiments.

For example, the processor 1420 may be configured to perform the action performed by the processing unit 1310, and the input/output interface 1410 may be configured to perform the action performed by the communication unit 1320. Details are not described again.

Optionally, the communication apparatus 1400 may further include at least one memory 1430, configured to store program instructions and/or data. The memory 1430 is coupled to the processor 1420. Coupling in embodiments of this application may be indirect coupling or a communication connection between apparatuses, units, or modules, may be in an electrical form, a mechanical form, or another form, and is for information exchange between the apparatuses, the units, or the modules. The processor 1420 may operate in cooperation with the memory 1430. The processor 1420 may execute the program instructions stored in the memory 1430. At least one of the at least one memory may be integrated with the processor.

In this embodiment of this application, the memory 1430 may be a non-volatile memory like a hard disk drive (hard disk drive, HDD) or a solid-state drive (solid-state drive, SSD), or may be a volatile memory (volatile memory) like a random access memory (random access memory, RAM). The memory is any other medium that can be for carrying or storing expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

In this embodiment of this application, the processor 1420 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by using a combination of hardware in the processor and a software module.

FIG. 15 shows the communication apparatus 1500 according to an embodiment of this application. The communication apparatus 1500 is configured to implement the communication methods provided in this application. The communication apparatus 1500 may be a communication apparatus that applies the communication methods shown in embodiments of this application, may be a component in the communication apparatus, or may be an apparatus that can be used in combination with the communication apparatus. The communication apparatus 1500 may be a first network element or a third network element. The communication apparatus 1500 may be a chip system or a chip. In this embodiment of this application, the chip system may include a chip, or may include the chip and another discrete device. The communication methods provided in the foregoing embodiments may be partially or completely implemented by hardware or software. When the communication methods are implemented by the hardware, the communication apparatus 1500 may include an input interface circuit 1501, a logic circuit 1502, and an output interface circuit 1503.

Optionally, an example in which the apparatus is configured to implement a function of a receiving end is used. The input interface circuit 1501 may be configured to perform the receiving action performed by the communication unit 1320, the output interface circuit 1503 may be configured to perform the sending action performed by the communication unit 1320, and the logic circuit 1502 may be configured to perform the action performed by the processing unit 1310. Details are not described again.

Optionally, during specific implementation, the communication apparatus 1500 may be a chip or an integrated circuit.

Some or all of operations and functions performed by the communication apparatus described in the foregoing method embodiment of this application may be completed by using the chip or the integrated circuit.

An embodiment of this application provides a computer-readable storage medium, storing a computer program. The computer program includes instructions for performing the foregoing method embodiments.

An embodiment of this application provides a computer program product including instructions. When the computer program product runs on a computer, the computer is enabled to perform the foregoing method embodiments.

An embodiment of this application provides a communication system, including a first network element and a second network element. The communication system may be configured to perform any one or more procedures in FIG. 5 to FIG. 12.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

It should be noted that a part of this patent application document includes content protected by copyright. Except for making copies of patent documents of the Patent Office or recorded content of patent documents, the copyright owner reserves the copyright.

The SF, the sensing server, the device supporting N3GPP sensing, or the first device in the foregoing apparatus embodiments respectively corresponds to the SF, the sensing server, the device supporting N3GPP sensing, or the first device in the method embodiments, and a corresponding module or unit performs corresponding steps. For example, a communication unit (a transceiver) performs a receiving or sending step in the method embodiments, and a step other than sending and receiving may be performed by a processing unit (a processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a compute device and an application that runs on the compute device may be components. One or more components may reside within a process and/or an execution thread, and a component may be located on one computer and/or distributed between two or more computers. In addition, these components may be executed by various computer-readable media that store various data structures. For example, the components may communicate by using a local and/or remote process based on a signal having one or more data packets (for example, data from two components interacting with another component in a local system, in a distributed system, and/or across a network such as the internet interacting with another system by using the signal).

A person of ordinary skill in the art may be aware that, with reference to various illustrative logical blocks (illustrative logical blocks) and steps (steps) described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. When the functions are implemented in the form of a software functional unit and sold or used as an independent product, the functions may be stored in a computer-readable storage medium.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

In the descriptions of this application, terms such as "first" and "second" are only for distinction and description, but cannot be understood as indicating or implying relative importance, or as indicating or implying a sequence. It should be noted that an appearance sequence of "first", "second", and the like is not limited in this application. For example, "second" may appear first, and then "first" appears. This is not limited in this application.

In the descriptions of this application, "at least one" means one or more, and "a plurality of" means two or more. "At least one of the following" or a similar expression thereof indicates any combination of the items, and includes a singular item or any combination of plural items. For example, at least one of a, b, or c may indicate a, b, c, a and b, a and c, b and c, or a, b, and c, where a, b, and c may be singular or plural. In the descriptions of this application, "/" indicates "or". For example, a/b indicates a or b.

## Claims

1. A communication method, comprising:
obtaining, by a sensing network element, capability information of a device supporting a non-3rd generation partnership project N3GPP sensing capability;
receiving, by the sensing network element, a sensing request message from a requesting device, wherein the sensing request message is for requesting sensing data;
determining, by the sensing network element, a first device based on the capability information in response to the sensing request message, wherein the first device is one or more devices supporting an N3GPP sensing capability;
sending, by the sensing network element, a first message to the first device, wherein the first message is for requesting N3GPP sensing data; and
receiving, by the sensing network element, first sensing data from the first device, wherein the first sensing data comprises the N3GPP sensing data.

2. The method according to claim 1, wherein the device supporting an N3GPP sensing capability comprises:
a device having an N3GPP sensing capability and/or a device connected to the device having an N3GPP sensing capability.

3. The method according to claim 1 or 2, wherein the determining, by the sensing network element, the first device based on the capability information comprises:
selecting, by the sensing network element, the first device based on first sensing requirement information and the capability information.

4. The method according to any one of claims 1 to 3, wherein the first message comprises second sensing requirement information.

5. The method according to any one of claims 1 to 4, wherein the obtaining, by the sensing network element, the capability information of the device supporting an N3GPP sensing capability comprises:
obtaining, by the sensing network element, the capability information from the device supporting an N3GPP sensing capability, an application function, a unified data repository network element, a unified data management network element, an N3GPP sensing capability repository function network element, or an access and mobility management network element.

6. The method according to claim 5, wherein the method further comprises:
sending, by the sensing network element, a device request message and/or a device subscription message to the device supporting an N3GPP sensing capability, the application function, the unified data repository network element, the unified data management network element, the N3GPP sensing capability repository function network element, or the access and mobility management network element, wherein
the device request message and/or the device subscription message comprise/comprises third sensing requirement information, and the third sensing requirement information is for discovering a device supporting an N3GPP sensing capability.

7. The method according to any one of claims 1 to 6, wherein the capability information comprises one or more of the following:
a supported sensing area;
a position;
an indication indicating that an N3GPP sensing capability is supported;
a supported sensing type;
a device identifier;
a supported sensing capability indicator; and
supported sensing data fusion capability information, indicating that fusion of N3GPP sensing data and 3GPP sensing data is supported, and/or indicating a supported fusion indicator of N3GPP sensing data and 3GPP sensing data.

8. The method according to any one of claims 1 to 7, wherein the method further comprises:
sending, by the sensing network element, second sensing data to the requesting device.

9. The method according to claim 8, wherein the method further comprises:
receiving, by the sensing network element, 3GPP sensing data from a second device, wherein the second device is a device supporting a 3GPP sensing capability; and
generating, by the sensing network element, the second sensing data based on the first sensing data and the 3GPP sensing data.

10. The method according to claim 9, wherein the first message is further used by the first device to obtain the 3GPP sensing data, and the second device and the first device are a same device.

11. The method according to claim 8, wherein the method further comprises:
receiving, by the sensing network element, 3GPP sensing data from a sensing function network element; and
generating, by the sensing network element, the second sensing data based on the first sensing data and the 3GPP sensing data.

12. The method according to claim 11, wherein the method further comprises:
sending, by the sensing network element, a second message to the sensing function network element, wherein the second message is for requesting 3GPP sensing data.

13. The method according to any one of claims 1 to 12, wherein the first sensing data is generated based on the N3GPP sensing data and the 3GPP sensing data.

14. The method according to any one of claims 1 to 13, wherein the sensing request message comprises fourth sensing requirement information.

15. The method according to any one of claims 1 to 14, wherein one or more of the first sensing requirement information, the second sensing requirement information, the third sensing requirement information, and the fourth sensing requirement information comprise one or more of the following information:
a required sensing area;
a required sensing capability indicator;
fusion requirement information, indicating to fuse N3GPP sensing data and 3GPP sensing data, and/or indicating a required fusion indicator of N3GPP sensing data and 3GPP sensing data;
a required sensing type; and
sensing service information, wherein the sensing service information is for determining one or more of the required sensing area, the required sensing capability indicator, the fusion requirement information, and the required sensing type.

16. The method according to any one of claims 1 to 15, wherein the method further comprises:
sending, by the sensing network element to the first device, an address and/or data label information that are/is for receiving the first sensing data; and
receiving, by the sensing network element, the first sensing data from the first device comprises:
receiving, by the sensing network element from the first device, the first sensing data whose destination address is the address; and/or
receiving, by the sensing network element from the first device, the first sensing data that comprises the data label information.

17. A communication method, comprising:
receiving, by a first device, a first message from a sensing network element, wherein the first message is for requesting N3GPP sensing data, and the first device is a device supporting N3GPP sensing;
obtaining, by the first device, first sensing data in response to the first message, wherein the first sensing data comprises the N3GPP sensing data; and
sending, by the first device, the first sensing data to the sensing network element.

18. The method according to claim 17, wherein the first device comprises:
a device having an N3GPP sensing capability and/or a device connected to the device having an N3GPP sensing capability.

19. The method according to claim 17 or 18, wherein the method further comprises:
sending, by the first device, capability information of the first device to the sensing network element, an application function, a unified data repository network element, a unified data management network element, an N3GPP sensing capability repository function network element, or an access and mobility management network element, wherein the capability information is for determining the first device.

20. The method according to claim 19, wherein the method further comprises:
receiving a device request message and/or a device subscription message from the sensing network element, wherein
the device request message and/or the device subscription message comprise/comprises third sensing requirement information, and the third sensing requirement information is for discovering a device supporting an N3GPP sensing capability.

21. The method according to claim 19 or 20, wherein the capability information comprises one or more of the following:
a supported sensing area;
a position;
an indication indicating that an N3GPP sensing capability is supported;
a supported sensing type;
a device identifier;
a supported sensing capability indicator; and
supported sensing data fusion capability information, indicating that fusion of N3GPP sensing data and 3GPP sensing data is supported, and/or indicating a supported fusion indicator of N3GPP sensing data and 3GPP sensing data.

22. The method according to any one of claims 17 to 21, wherein the first message comprises second sensing requirement information.

23. The method according to any one of claims 17 to 22, wherein the first message is further for requesting 3GPP sensing data, and the method further comprises:
sending, by the first device, the 3GPP sensing data to the sensing network element; or
generating, by the first device, the first sensing data based on the 3GPP sensing data and the N3GPP sensing data.

24. The method according to any one of claims 17 to 23, wherein one or two of the second sensing requirement information and the third sensing requirement information comprise one or more of the following information:
a required sensing area;
a required sensing capability indicator;
fusion requirement information, indicating to fuse N3GPP sensing data and 3GPP sensing data, and/or indicating a required fusion indicator of N3GPP sensing data and 3GPP sensing data;
a required sensing type; and
sensing service information, wherein the sensing service information is for determining one or more of the required sensing area, the required sensing capability indicator, the fusion requirement information, and the required sensing type.

25. The method according to any one of claims 17 to 24, wherein the method further comprises:
receiving, by the first device from the sensing network element, an address and/or data label information that are/is for receiving the first sensing data; and
sending, by the first device, the first sensing data to the sensing network element comprises:
sending, by the first device to the sensing network element, the first sensing data whose destination address is the address; and/or
sending, by the first device to the sensing network element, the first sensing data that comprises the data label information.

26. A communication method, comprising:
obtaining capability information of a device supporting an N3GPP sensing capability;
receiving a sensing request message from a requesting device, wherein the sensing request message is for requesting sensing data;
determining a first device based on the capability information in response to the sensing request message, wherein the first device is one or more devices supporting an N3GPP sensing capability;
sending a first message to the first device, wherein the first message is for requesting N3GPP sensing data; and
receiving first sensing data from the first device, wherein the first sensing data comprises the N3GPP sensing data.

27. The method according to claim 26, wherein the device supporting an N3GPP sensing capability comprises:
a device having an N3GPP sensing capability and/or a device connected to the device having an N3GPP sensing capability.

28. The method according to claim 26 or 27, wherein the receiving the first sensing data from the first device comprises:
receiving, by a sensing server, the first sensing data from the first device; and
sending, by the sensing server, the first sensing data to a sensing network element.

29. The method according to any one of claims 26 to 28, wherein the obtaining the capability information of the device supporting an N3GPP sensing capability comprises:
obtaining, by the sensing server, the capability information of the device supporting an N3GPP sensing capability;
the receiving the sensing request message from the requesting device comprises:
receiving, by the sensing network element, the sensing request message; and
the determining the first device based on the capability information in response to the sensing request message comprises:
sending, by the sensing network element, a third message to the sensing server in response to the sensing request message, wherein the third message is for requesting N3GPP sensing data; and
determining, by the sensing server, the first device based on the capability information in response to the third message.

30. The method according to any one of claims 26 to 29, wherein the determining the first device based on the capability information comprises:
selecting the first device based on first sensing requirement information and the capability information.

31. The method according to claim 29, wherein the third message comprises second sensing requirement information.

32. The method according to any one of claims 26 to 31, wherein the obtaining the capability information of the device supporting an N3GPP sensing capability comprises:
obtaining, by the sensing server, the capability information from the device supporting an N3GPP sensing capability, an application function, a unified data repository network element, a unified data management network element, an N3GPP sensing capability repository function network element, or an access and mobility management network element.

33. The method according to claim 32, wherein the sensing server sends a device request message and/or a device subscription message to the device supporting an N3GPP sensing capability, the application function, the unified data repository network element, the unified data management network element, the N3GPP sensing capability repository function network element, or the access and mobility management network element, wherein the device request message and/or the device subscription message comprise/comprises third sensing requirement information, and the third sensing requirement information is for discovering a device supporting an N3GPP sensing capability.

34. The method according to any one of claims 26 to 33, wherein the capability information comprises one or more of the following: a supported sensing area; a position; an indication indicating that an N3GPP sensing capability is supported; a device identifier; a supported sensing type; a supported sensing capability indicator; and supported sensing data fusion capability information, indicating that fusion of N3GPP sensing data and 3GPP sensing data is supported, and/or indicating a supported fusion indicator of N3GPP sensing data and 3GPP sensing data.

35. The method according to any one of claims 26 to 34, wherein the sensing request message comprises fourth sensing requirement information; and
the method further comprises:
sending, by the sensing network element, second sensing data to the requesting device.

36. The method according to claim 35, wherein the method further comprises:
generating, by the sensing network element, the second sensing data based on the first sensing data and 3GPP sensing data.

37. The method according to claim 36, wherein generating, by the sensing network element, the second sensing data based on the first sensing data and the 3GPP sensing data comprises:
receiving, by the sensing network element, the 3GPP sensing data from a second device, and receiving the first sensing data from the sensing server; and
generating, by the sensing network element, the second sensing data based on the first sensing data and the 3GPP sensing data.

38. The method according to claim 37, wherein the first message is further used by the first device to obtain the 3GPP sensing data, and the second device and the first device are a same device.

39. The method according to any one of claims 36 to 38, wherein generating, by the sensing network element, the second sensing data based on the first sensing data and the 3GPP sensing data comprises:
processing, by the sensing network element, the first sensing data and the 3GPP sensing data based on the fourth sensing requirement information, to generate the second sensing data.

40. The method according to any one of claims 26 to 39, wherein the first sensing data is generated based on the N3GPP sensing data and the 3GPP sensing data.

41. The method according to any one of claims 26 to 40, wherein the sensing request message comprises the fourth sensing requirement information.

42. The method according to any one of claims 26 to 41, wherein one or more of the first sensing requirement information, the second sensing requirement information, the third sensing requirement information, and the fourth sensing requirement information comprise one or more of the following information: a required sensing area; a required sensing capability indicator; fusion requirement information, indicating to fuse N3GPP sensing data and 3GPP sensing data, and/or indicating a required fusion indicator of N3GPP sensing data and 3GPP sensing data; a required sensing type; and sensing service information, wherein the sensing service information is for determining one or more of the required sensing area, the required sensing capability indicator, the fusion requirement information, and the required sensing type.

43. The method according to any one of claims 26 to 42, wherein the sensing server may further send, to the first device, an address and/or data label information that are/is for receiving the first sensing data; and
the receiving the first sensing data from the first device comprises:
receiving, by the sensing server from the first device, the first sensing data whose destination address is the address; or receiving, by the sensing server from the first device, the first sensing data that comprises the data label information.

44. A communication apparatus, comprising a processor, wherein the processor is configured to execute a computer program or instructions, to implement the method according to any one of claims 1 to 43.

45. A computer-readable storage medium, wherein the storage medium stores a computer program or instructions; and when the computer program or the instructions are executed by a communication apparatus, the method according to any one of claims 1 to 43 is implemented.

46. A computer program product, wherein when the computer program product is executed by a computer, the computer is caused to perform the method according to any one of claims 1 to 43.

47. A chip, comprising a processor, wherein the processor is configured to perform the method according to any one of claims 1 to 43.

48. A communication system, comprising a communication apparatus configured to perform the method according to any one of claims 1 to 16 and a communication apparatus configured to perform the method according to any one of claims 17 to 25.

49. A communication system, comprising a communication apparatus configured to perform the method according to any one of claims 17 to 25 and a communication apparatus configured to perform the method according to any one of claims 26 to 43.
